(19) **Europäisches Patentamt / European Patent Office / Office européen des brevets**

(11) **EP 4 297 375 B1**

(12) **EUROPEAN PATENT SPECIFICATION**

(45) Date of publication and mention
of the grant of the patent:
**18.03.2026  Bulletin 2026/12**

(21) Application number: **22179789.7**

(22) Date of filing: **20.06.2022**

(51) International Patent Classification (IPC):
**H04L 67/306** $^{(2022.01)}$

(52) Cooperative Patent Classification (CPC):
**H04L 67/306**

(54) **METHOD AND SYSTEM FOR OPTIMIZING SCREEN TIME ACCORDING TO SITUATIONAL CONTEXT**

VERFAHREN UND SYSTEM ZUM OPTIMIEREN DER BILDSCHIRMZEIT JE NACH SITUATIVEM KONTEXT

PROCÉDÉ ET SYSTÈME D'OPTIMISATION DE LA DURÉE D'ÉCRAN SELON LE CONTEXTE SITUATIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2023   Bulletin 2023/52**

(73) Proprietor: **Koa Health Digital Solutions S.L.U.**
**08018 Barcelona (ES)**

(72) Inventors:
 • **BUDA, Teodora Sandra**
   **08018 Barcelona (ES)**

 • **GARRIGA CALLEJA, Roger**
   **08018 Barcelona (ES)**
 • **MATIC, Aleksandar**
   **08018 Barcelona (ES)**

(74) Representative: **Lorenz Seidler Gossel Part. mbB**
**Widenmayerstr. 23**
**80538 München (DE)**

(56) References cited:
   **WO-A1-2014/106168      US-A1- 2013 138 983**
   **US-A1- 2013 246 595**

**Description**

Smart devices are tightly embedded in our everyday life, and an ample interest in the effects of their use both by the scientific communities and the media does not come as a surprise.

Previous work highlighted negative effects of smartphone usage and general screen time both in the context of a typical as well as of atypical (usually referred to as excessive or problematic) use.

Recently, however, scientists argued that there is a lack of strong evidence on the detrimental effects of smartphones use on mental health and that previous studies and systematic reviews overestimated the negative associations. It was even found that the moderate use of digital technology is not intrinsically harmful and may be advantageous in a connected world.

Thus, it appears that the effects of smart device usage are more variable than expected and most likely vary with context. For example using a smart device alone at home to consume social media may have a negative effect on the user whereas using the smart device to play music when meeting with friends may actually have a positive effect on the user.

Furthermore, a problem associated with many smart devices is their limited battery life, as only a finite level of energy can be stored in the device between battery loading times. Energy-intensive uses of a smart device may lead to an even faster decrease in battery level. A method of limiting energy consumption through personalization of settings is known from US2013/138983A1.

There thus exists a need for reducing the negative impact of smart device usage and / or increasing battery life of smart devices.

The present invention thus provides a computer-implemented method and a device for adapting or optimizing the operation of the device to achieve a desired target state, for example extended battery life. Additionally, a higher wellbeing score of the user may be achieved.

The technical problem is solved by the method according to claim 1 and the device according to claim 9.

The invention thus relates to a computer-implemented method for adapting the operation of a device to achieve a desired target state, comprising:

- Detecting a length of time a user interacts with the device, in particular a screen time,
- Detecting a first operation mode of the device in that the device is operated during the time the user interacts with the device,
- Detecting at least one situational parameter of the user;
- inferring a state value of the user and / or device based on the monitored time length and the detected operation mode of the device and the at least one situational parameter of the user,
- Comparing the inferred state value of the user and / or device to a target state and evaluating whether the state value matches the target state or falls into a tolerance range surrounding the target state, and
- If the evaluation result indicates that the state value does not match the target state or does not fall into the tolerance range surrounding the target state, taking at least one action relating to the operation of the device.

The state value of the user and / or device may also be directly measured, e.g. the heart rate of the user or a battery fill level of the device. In general, the target state may pertain to a state of the user and / or a state of the device and the measured or inferred data or state values may similarly pertain to the user or device.

For example, it may be detected that the user interacts with the device for 20 min and that the device is operated during this time to display videos on a social media platform. At least one situational parameter of the user is detected, for example the location of the user may be detected, e.g the user is present at home.

Based on this detected information, preferably a model is used to infer by means of a function, a state value of the user and / or device, for example based on historical data pertaining to the user it may be inferred that previously when the user watched videos on a social media platform alone at home, a negative impact on the user's well being was detected, for example by sensing physiological data of the user or by the user actively reporting negative feedback to the device. For example, the user may be inferred to have a state value corresponding to a wellbeing score of 4.

Similarly, it may be detected that the displaying of videos rapidly drains battery life of the smart device and that the device has a state value corresponding to a battery fill level of 28 %.

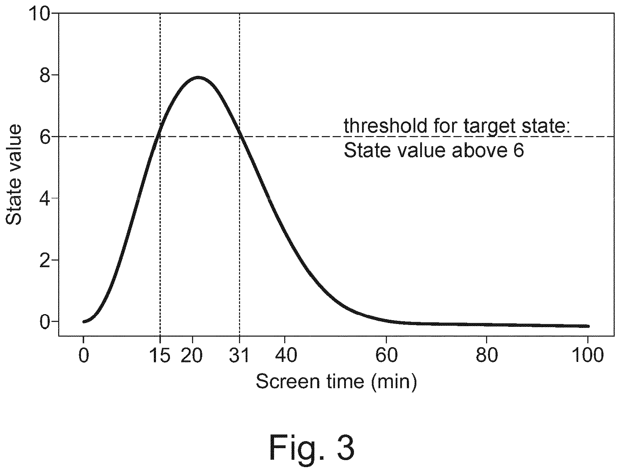

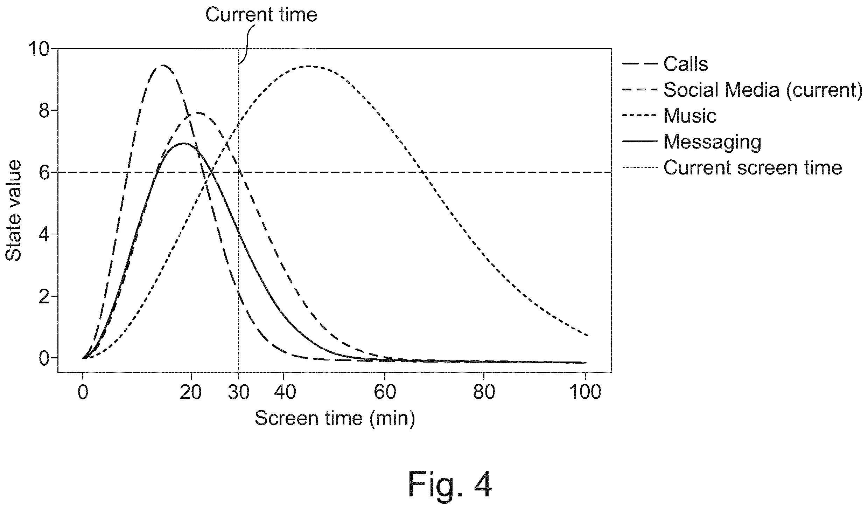

The function can be the following function Formula 1 displayed in general format below. Examples of functions of this format are shown in Fig. 3 and Fig. 4 for illustration. Given the personal characteristics (P), passive sensing data (S), context / situational parameter(s) (C), screen time (t) and mode of operation (also referred to as purpose of use or purpose) (U)

$$f(P,S,C,t,U) = \frac{b(P,S,C,U)t^2}{a(P,S,C,U)^3} e^{(-t^2/(2a(P,S,C,U)))} \quad \text{(Formula 1)}$$

where $b(P, S, C, U)$ and $a(P, S, C, U)$ are linear functions of each of the parameters and the function $f(P,S, C, t, U)$ is preferably optimized by minimizing the Mean Squared Error between $f(P, S, C, t, U)$ and the actual state values observed on historical data.

Preferably, a device or method according to the invention can use the function, in particular the function according to Formula 1, to infer the context (e.g. with family in the park, eating) a user is experiencing, in particular to infer at least one situational parameter of the user, and / or to infer a current state value of the user and / or device.

Preferably, the function takes into account a weighted sum of the data reflecting personal characteristics (P), passive sensing data (S), context / situational parameter(s) (C), screen time (t) and mode of operation (U). For example, the term $a(P,S,C,U)$ of the function may take the form

$a(P,S,C,U) = w_0 + w_1 gender + w_2 age + w_3 steps + w_4 location\_park + w_5 location\-\_home + w_6 activity\_eating + w_7 activity\_working + w_8 company\_friends + w_9 company\_family + w_{10} company\_alone + w_{11} purpose\_socialmedia + w_{12} purpose\_music + w_{13} purpose\_messaging$

wherein the numerical value of the weighting factors $w_0$ to $w_{13}$ preferably is set by the method or device according to the present invention based on historical data of a given user. Weighting factors are preferably generated for the term $b(P,S,C,U)$ analogously, weighting factors may very between $a(P,S,C,U)$ and $b(P,S,C,U)$ may vary.

In other words, the device can be configured to generate a set of weighting factors associated with the at least one situational parameter of the user and / or at least one operation mode of the device, based on historical data relating to that user and / or device. If no such historical data are available for a given user, the device can retrieve historical data from similar people.

For example, historical data of a user may indicate that in the past, displaying videos for 30 min at lunch time resulted in the target state of a battery fill level of 25% at 6 pm not being reached by the user. Thus, the mode of operation "displaying videos" may be associated with a negative weighting factor, because this mode of operation has shown to have a negative effect on the achievement of the target state.

The size of the numerical value of the weighting factor can be set to reflect the strength of the correlation between the weighted parameter and the probability of the state value matching the target state.

For example, if the correlation between the operation mode "displaying videos" and the target state of a battery fill level of 25% at 6 pm not being reached by the user is stronger than the correlation between the operation mode "playing music" and the target state of a battery fill level of 25% at 6 pm not being reached by the user (e.g. because the display of videos leads to a more rapid decrease in battery fill level than playing music), both operation modes may be associated with a negative weighting factor, but the weighting factor associated with the operation mode "displaying videos", e.g. -10, may be larger than the weighting factor associated with the operation mode "playing music", e.g. -3.

The same can hold true for positive weighting factors. For example, historical data may indicate the operation mode "reading" at lunch time is strongly associated with the target state of a battery fill level of 25% at 6 pm being reached (e.g. because the user then does not watch energy-intensive videos). In this case, the weighting factor associated with the operation mode "reading" would be positive, e.g. 10. Historical data may indicate further that the operation mode "music" at lunch time is only loosely, but positively correlated with the target state of a battery fill level of 25% at 6 pm being reached. In this case, the weighting factor associated with the operation mode "music" would be positive but of a smaller numerical value, e.g. 5.

The numerical value of each weighting factor can be determined using a fitting method based on the function according to Formula 1. For example, the function according to Formula 1 may be fitted, which preferably includes the finding of the optimal values of the weighting factors, using historical data relating to a particular user from other situations in which the screen time, context and state value are known. The method to do the fitting may be chosen at will.

For example, as a loss function for regression the mean squared error between the predicted values of the function in historical data (output of the function applied to the data) and the actual observed values of the state value can be used. Then, the weighting factors can be initially set to a certain value (e.g. all of them 0) and iteratively changed using e.g. Gradient Descent until a difference below a desired threshold is reached. Alternatively, a fixed number of iterations can be performed.

In other words, according to an embodiment of the invention, the device can be configured to retrieve historical data relating to a particular user and generate, for example by using a regression fitting method and the historical data, for this particular user for each mode of operation a function predicting the state value depending from a length of screen time (see e.g. Fig. 4 for exemplary functions). Alternatively or additionally, the device can be configured to extract at least one weighting factor or multiple weighting factors from each function predicting the state value depending from a length of screen time.

According to an embodiment of the invention, the device or method may comprise a plurality of models or functions, wherein each model or function corresponds to a specific situational parameter (that can be an interaction variable), specific mode of operation of the device, and / or specific user.

The state value of the user and / or device can be detected or inferred in real-time, preferably on a time-instant by time-instant basis. Additionally or alternatively, the context of the user and / or device or at least one situational parameter of the user and / or device can be detected or inferred in real-time, preferably on a time-instant by time-instant basis.

A device or method according to the present invention can also be configured to derive for at least one time-instant a derivative of at least one of the functions, preferably a function following the general formula given as Formula 1, in order to determine for this time instant a change or projected change of for example the state value.

A device according to the present invention may thus be configured to detect a change of the state value for a given time instant, e.g. a specific time point in screen time in the example in Fig. 3. For example, if the state value is the battery fill level, for each time instant of screen time, it can be detected, how the battery level changes. E.g. at 3 min of screen time, the battery level decreases with a rate of -1 and after 10 min of screen time, the battery level decreases with a rate of -2. Turning to the example in Fig. 3, e.g. at 5 min of screen time, the wellbeing score increases e.g. with a rate of 1,2 and after 25 min of screen time, the wellbeing score decreases with a rate of -1.

In the next step, the inferred state value is compared to a target state. The target state may be regarded as a target state value or a target range of state values, for example, the target state may correspond to a range of wellbeing scores of 6 or above. The target state may also correspond to a range of battery fill level of 25 % or above.

In the context of the present invention, the user preferably is a healthy individual and in examples in that a wellbeing score is mentioned this preferably means that the well-being of a healthy individual is to be improved. The present invention does not pertain to any therapeutic applications.

The present invention may be regarded by the person skilled in the art as pertaining to controlling a specific technical system or process, e.g. a smartphone or a process or mode of operation running thereon, based on data relating to a user and also taking into account a situational context of the user, to achieve a defined target state, e.g. a desired battery fill level at a certain time point. In other words, according to the invention, preferably data acquisition and analysis are used to optimize the operation of a device to achieve a desired target state, e.g. a desired battery fill level, wherein the situational context of the device and / or user is taken into account. The present invention may be applied to a device such as e.g. a laptop, a tablet, a smartphone, a smart watch or any other suitable electronic device.

In the present example, the state value of the user is below the target state, because the inferred wellbeing score is 4 and the target state is 6. The state value of the device is in the target state, because the inferred or measured battery fill level is 28% and the target state is 25 % or above.

As the inferred state value of the user corresponding in this example to a wellbeing score is 4, it does not match the target state and in this example does also not fall within a tolerance range that may be set at e.g. a score of 5.5.

Thus at least one action pertaining to the operation of the device is taken, preferably by a control unit of the device.

For example, a recommendation may be output to the user to switch from the operation of the device for watching videos on a social media platform to an operation of the device for playing music.

This recommendation is preferably based on a prediction that the recommended operation of the smart device (playing music in this example) will improve the state value of the user, e.g. the wellbeing score of the user, and thus bring the state value closer to the target state.

In addition to that, changing the operation mode of the device from the energy intensive display of videos to the less energy intensive playing of music will safe battery life and thus prolong the time in that the state value of the device (battery fill level of 28% or above) matches the target state (battery fill level of 25 % or above in the present example).

In this way, in this example, the available energy resources of the smart device are selectively allocated to operation modes of the smart device that improve the wellbeing of the user. In other words, in this example the invention assists the user in using the available limited energy resources of the smart device in an optimized way for reaching a target state.

The method may be performed automatically and without requiring active input from the user. For example, physiological data or parameters of the user may be monitored to distinguish operation modes of the device the user claims to experience as associated with a high wellbeing score, whereas objectively these operation modes reduce the wellbeing score, as detected e.g. through a high heart-rate in a sedentary user. Thus, the method may be configured to infer the state value of the user based on measured data.

Alternatively or additionally, the user may provide input regarding their state value, e.g. by indicating their current perceived wellbeing score.

Similarly, the target state and / or the tolerance range may be inferred or input / set by the user.

For example, if the target state is inferred, it may be inferred from historical data of the user that the user regularly works until 8 pm. Thus, the inferred target stage may correspond to a battery fill level at 25 % at 6 pm, because in the last two hours of works the user regularly uses 10 % of battery fill level. Alternatively, it may be inferred that a wellbeing score of 6 is desirable when the user is in company and that this score is possible based on historical data relating to that user.

According to an embodiment of the invention, the action relating to the operation of the device is outputting a recommendation, in particular a recommendation regarding a restriction or extension of screen time and / or a recommendation regarding switching the operation mode of the device from the first operation mode to a second operation mode.

For example, a model may be used to infer a function of a state value in relation to a length of screen time for a given operation mode of the device in a given context.

According to an embodiment of the invention, the action relating to the operation of the device is restricting screen time and / or suppressing notifications for a period of time predicted to bring the state value closer to the target state.

According to an embodiment of the invention, the method comprises:

- Inferring by means of a model a function of a state value in relation to a length of screen time, wherein the at least one detected situational parameter of the user and the detected first operation mode of the device are taken as constants,
- predicting, based on the function, a length of screen time in that the inferred state value matches the target state or falls into a tolerance range surrounding the target state, and
- based on the prediction, restricting or extending screen time and / or outputting a recommendation.

For example, the function may indicate that for the situational parameter "location" corresponding to "at home" and the operation mode "playing music", a screen time of 20 to 45 min results in the state value matching the target state.

The term screen time preferably means the length of time in that the device is operated in a given operation mode and / or the length of time in that the user interacts with the device.

According to an embodiment of the invention, the method comprises:

- inferring by means of a model a function of a state value in relation to a length of screen time for at least the detected first operation mode of the device and at least one other operation mode of the device, wherein the at least one detected situational parameter of the user is taken as a constant,
- predicting, based on the function, for each operation mode a length of screen time in that the inferred state value matches the target state or falls into a tolerance range surrounding the target state,
- selecting, based on the prediction and preferably a present time instant, a second operation mode, and
- if a detected length of screen time of the user for the first operation mode of the device has reached the limit of the predicted length of screen time for the first operation mode in that the inferred state value matches the target state or falls into a tolerance range surrounding the target state,
- switching the operation mode of the device from the first operation mode to the second operation mode or recommending to do so.

For example, after 45 min of operating the device for playing music, the device may issue a recommendation to the user to change to the operation mode "reading", because the function indicates that for this operation mode a screen time of 50 to 90 min results in the state value matching the target state. Additionally, operating the device for reading may be less energy consuming than playing music.

According to an embodiment of the invention, the method comprises the following steps:

- the model infers a function of a state value in relation to a length of screen time for the detected first operation mode of the device and a plurality of other operation modes of the device, and
- the plurality of other operation modes of the device are ranked based on the predicted length of screen time for each operation mode in that the inferred state value matches the target state or falls into a tolerance range surrounding the target state, and
- the second operation mode is selected based on the ranking of the operation modes and / or a detected length of screen time of the user for the first operation mode of the device.

Preferably, a separate function is generated for each operation mode. For each moment in time, a second operation mode may be selected. Thus, the selected second operation mode depends on the present time instant, as illustrated e.g. in Fig. 4.

According to an embodiment of the invention, the method comprises the following steps:

- extracting a habitual screen time pattern comprising at least one time instant from historical data relating to the user and / or device,
- comparing the habitual screen time pattern on a time-instant-by-time-instant basis to a screen time pattern predicted by the model to be associated with the target state, and
- if the comparison indicates that the habitual screen time pattern does not match the screen time pattern predicted to be associated with the target state or does not fall into a tolerance range surrounding the screen time pattern predicted to be associated with the target state, taking the at least one action relating to the operation of the device, wherein
- the at least one action preferably relates to that time instant of the habitual screen time pattern predicted by the model to require the minimum changes for reaching the target state.

This may increase the acceptance of the method or device according to the present invention by the user, because the method or device according to the present invention interferes with the user's habitual device usage as little as possible.

For example, if the target state relates to battery fill level and the user regularly reads the news for 60 min on the device every evening but only occasionally watches videos on the device during lunch for 20 to 25 min, the method or device may restrict screen time during the operation mode of watching videos during lunch time, because this seems to be a less fixed and important element of the user's screen time pattern. **In** other words, interfering with screen time at a time instant in that the user appears to have a less fixed routine will most likely be accepted by the user more readily.

According to an embodiment of the invention, the method comprises the following steps:

- inferring a first state value for a first time instance and a second state value for a second time instant,
- evaluating whether a distance between the first state value and the target state is equal, larger or smaller than a distance between the second state value and the target state, and
- indicating the result of the evaluation to the user.

**In** other words, trends may analysed in the state value for a given operation mode of the device. Preferably, the first state value corresponding to the first time instance and the second state value corresponding to second time instant relate to the same operation mode of the device. For example, when the device is operated to play music, the state value corresponding to a wellbeing score of the user may be 4 after 5 min and may be 5 after 20 min. If the target state corresponds to a wellbeing score of 6, then the trend shows that the state value gets closer to the target state. This indication may be indicated to the user to encourage the user to continue to play music.

Similarly, if the target state relates to the battery fill level, e.g. a battery fill level of 10 % after 40 min, and the device is operated to play music, the state value corresponding to a battery fill level may be 29% after 5 min and may be 27% after 20 min. Based on this battery usage, the target state will be reached, because the state value drops slow enough for the target state to be reached. Thus, an indication may be output to the user to encourage the user to continue to play music and not switch to videos or another energy intensive operation mode. For example it can be recommended to extend screen time for this operation mode.

Another aspect of the invention relates to a device configured to adapt the operation of the device to achieve a desired target state. The device may be any smart electronic device such as a smart phone, table, laptop, computer etc.

All features disclosed in the context of the method according to the invention equally relate to a device according to the invention and vice versa, even though not all of these features or combinations thereof may be explicitly disclosed for the sake of brevity.

A device according to the present invention configured to adapt the operation of the device to achieve a desired target state; comprises:

a detection unit configured for

- detecting a length of time a user interacts with the device, in particular a screen time,
- detecting a first operation mode of the device in that the device is operated during the time the user interacts with the device,
- detecting at least one situational parameter of the user;

an evaluation unit configured for

- inferring a state value of the user and / or device based on the monitored time length and the detected operation mode of the device and the at least one situational parameter of the user,
- comparing the inferred state value of the user and / or device to a target state and evaluating whether the current state value matches the target state or falls into a tolerance range surrounding the target state, wherein

the device is configured for

- if the evaluation result indicates that the state value does not match the target state or does not fall into the tolerance range surrounding the target state, taking at least one action relating to the operation of the device.

According to an embodiment of the invention, the action relating to the operation of the device is outputting a recommendation, in particular a recommendation regarding a restriction or extension of screen time and / or a recommendation regarding switching the operation mode of the device from the first operation mode to a second operation mode.

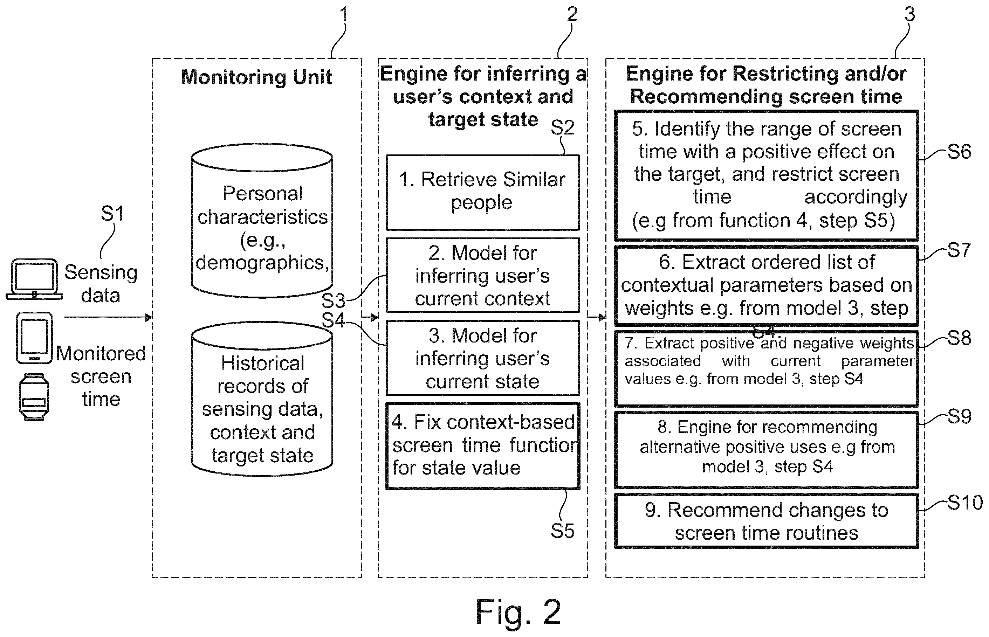

The detection unit can be a monitoring unit, for example a monitoring unit as shown in Fig. 2.

According to an embodiment of the invention, the action relating to the operation of the device is restricting screen time and / or suppressing notifications for a period of time predicted to bring the state value closer to the target state.

According to an embodiment of the invention, the evaluation unit comprises a model configured

- to infer a function of a state value in relation to a length of screen time, wherein the at least one detected situational parameter of the user and the detected first operation mode of the device are taken as constants, and
- to predict, based on the function, a length of screen time in that the inferred state value matches the target state or falls into a tolerance range surrounding the target state, and

the device is configured to, based on the prediction, restrict or extend screen time and / or output a recommendation.

According to an embodiment of the invention, the evaluation unit comprises a model configured:

- to infer a function of a state value in relation to a length of screen time for at least the detected first operation mode of the device and at least one other operation mode of the device, wherein the at least one detected situational parameter of the user is taken as a constant, and
- to predict, based on the function, for each operation mode a length of screen time in that the inferred state value matches the target state or falls into a tolerance range surrounding the target state, and
- select, based on the prediction, a second operation mode, and

the device is configured to

- if a detected length of screen time of the user for the first operation mode of the device has reached the limit of the predicted length of screen time for the first operation mode in that the inferred current state matches the target state or falls into a tolerance range surrounding the target state,
- switch the operation mode of the device from the first operation mode to the second operation mode or recommend to do so.

According to an embodiment of the invention, the model is further configured

- to infer a state value in relation to a length of screen time for the detected first operation mode of the device and a plurality of other operation modes of the device, and
- to rank the plurality of other operation modes of the device based on the predicted length of screen time for each operation mode in that the inferred state value matches the target state or falls into a tolerance range surrounding the target state, and
- to select the second operation mode based on the ranking of the operation modes and / or a detected length of screen time of the user for the first operation mode of the device.

According to an embodiment of the invention, the evaluation unit comprises a model configured

- to extract a habitual screen time pattern comprising at least one time instant from historical data relating to the user, and
- to compare the habitual screen time pattern of the user on a time-instant-by-time-instant basis to a screen time pattern predicted to be associated with the target state,
- if the comparison indicates that the habitual screen time pattern of the user does not match the screen time pattern predicted to be associated with the target state or does not fall into a tolerance range surrounding the screen time pattern predicted to be associated with the target state, to identify that time instant of the habitual screen time pattern predicted by the model to require the minimum changes for reaching the target state, and

the device is configured to

- if the comparison indicates that the habitual screen time pattern of the user does not match the screen time pattern predicted to be associated with the target state or does not fall into a tolerance range surrounding the screen time pattern predicted to be associated with the target state, take at least one action relating to the operation of the device, wherein
- the at least one action preferably relates to that time instant of the habitual screen time pattern predicted by the model to require the minimum changes for reaching the target state.

According to an embodiment of the invention, the evaluation unit comprises a model configured:

- to infer a first state value for a first time instance and a second state for a second time instant, wherein the first and second state value are inferred using the same function,
- to evaluate whether a distance between the first state value and the target state is equal, larger or smaller than a distance between the second state value and the target state, and

the device is configured to

- indicate the result of the evaluation to the user.

In other words, the invention may be described as follows:
An aspect of the invention relates to a method comprising:

detecting a period of time during which a user interacts with a smartphone;
detecting a first operational mode in which the user interacts with the smartphone during the period of time;
identifying a first situational context in which the user is interacting with the smartphone;
determining an interaction benefit based on the period of time, the first operational mode and the situational context;
determining whether the interaction benefit equals or exceeds a target level; and
if the interaction benefit does not equal or exceed the target level, recommending that the user interacts with the smartphone in a second operational mode.

The method can comprise the step: if the interaction benefit does not equal or exceed the target level, recommending that the user restricts an amount of time during which the user engages in the first operational mode.
The method can comprise the step: if the interaction benefit does not equal or exceed the target level, suppressing notifications from the smartphone relating to the first operational mode.
The target level can correspond to a condition selected from the group consisting of: a desired battery level and a desired device utilization level.
The interaction benefit can be determined as a function of the period of time, and preferably the first operational mode and the situational context are constant in the function.
The method can comprise the step: determining, based on the function, a maximum amount of time during which the user can engage in the first operational mode and maintain the interaction benefit above or at the target level.
The method can comprise the step: preventing the user from interacting with the smartphone in the first operational mode when the period of time during which the user has interacted with the smartphone exceeds the maximum amount of time.
The interaction benefit can be determined as a function of both the period of time during which the user interacts with the smartphone in the first operational mode and a second period of time during which the user interacts with the smartphone in the second operational mode, and wherein the situational context is constant in the function.
The method can comprise the step: ranking a plurality of operational modes according to a maximum amount of time during which the user can engage in each operational mode and still maintain the interaction benefit above or at the target level; and preferably recommending that the user interacts with the smartphone in the second operational mode based on the second operational mode having a highest ranking.
The method, wherein preferably the interaction benefit is determined as of a first time instant, and wherein the period of time ends at the first time instant, can further comprise: determining a second interaction benefit as of a second time instant; and indicating to the user whether the second interaction benefit is greater than, equal to, or less than the interaction benefit determined as of the first time instant.
According to an embodiment, the situational context identifies a context selected from the group consisting of: a location of the user, an activity undertaken by the user, and a category of persons accompanying the user.
Another aspect of the invention is directed to a system comprising:

a timer that detects a period of time during which a user of the system interacts with a smartphone;
a mode detector that identifies a first operational mode in which the user interacts with the smartphone during the period of time;
a sensor adapted to identify a situational context in which the user is interacting with the smartphone;
an evaluation unit adapted to determine an interaction benefit based on the period of time, the first operational mode and the situational context, wherein the evaluation unit determines whether the interaction benefit equals or exceeds a target level; and

a screen of the smartphone on which a recommendation is displayed to the user if the evaluation unit determines that the interaction benefit does not equal or exceed the target level.

The recommendation can be that the user should switch from interacting with the smartphone in the first operational mode to interacting with the smartphone in a second operational mode.

The recommendation can be that the user should limit an amount of time during which the user interacts with the smartphone in the first operational mode.

The system can be configured to suppress notifications to the user from the first operational mode if the evaluation unit determines that the interaction benefit does not equal or exceed the target level.

The evaluation unit can be configured to determine the interaction benefit as a function of the period of time, wherein the first operational mode and the situational context are constant in the function.

The situational context can e.g. be a context selected from the group consisting of: a location of the user, an activity undertaken by the user, and a category of persons accompanying the user.

A further aspect of the invention relates to a method comprising:

determining personal characteristics applicable to a user of a smartphone;

detecting sensing data corresponding to how the user is interacting with the smartphone;

detecting a situational parameter corresponding to a context in which the user is interacting with the smartphone;

detecting an operational mode in which the user is interacting with the smartphone;

determining, based on the personal characteristics, the sensing data and the situational parameter, a maximum amount of time during which the user can interact with the smartphone in the operational mode and still maintain a target wellbeing level;

detecting a period of time during which the user is interacting with the smartphone in the operational mode; and

recommending that the user interacts with the smartphone in a second operational mode if the period of time exceeds the maximum amount of time.

The personal characteristics can be selected from the group consisting of: a gender of the user, an age of the user, an ethnicity of the user, and a personality score of the user.

The sensing data can be selected from the group consisting of: a step count sensed while the user is interacting with the smartphone in the operational mode, GPS coordinates of the smartphone while the user is interacting with the smartphone in the operational mode, total data consumption of the smartphone while the user is interacting with the smartphone in the operational mode, ambient light level while the user is interacting with the smartphone in the operational mode, and ambient noise level while the user is interacting with the smartphone in the operational mode.

The context corresponding to the situational parameter can be selected from the group consisting of: a location of the user, an activity undertaken by the user, a category of persons accompanying the user, and a time of day during which the user is interacting with the smartphone.

The method can further comprise the step: suppressing notifications from the smartphone relating to the operational mode if the period of time exceeds the maximum amount of time.

The method can further comprise the step: recommending that the user stops engaging in the operational mode if the period of time exceeds the maximum amount of time.

Further features, effects and advantages of the invention will become apparent from the following detailed description referring to the figures. In the Figures

Fig. 1 illustrates the general concept of the context-dependent impact of screen time on a target state.

Fig. 2 illustrates an embodiment of the present invention.

Fig. 3 shows an exemplary function for inferring a state value.

Fig. 4 shows exemplary functions for inferring a state value for different operation modes of the device.

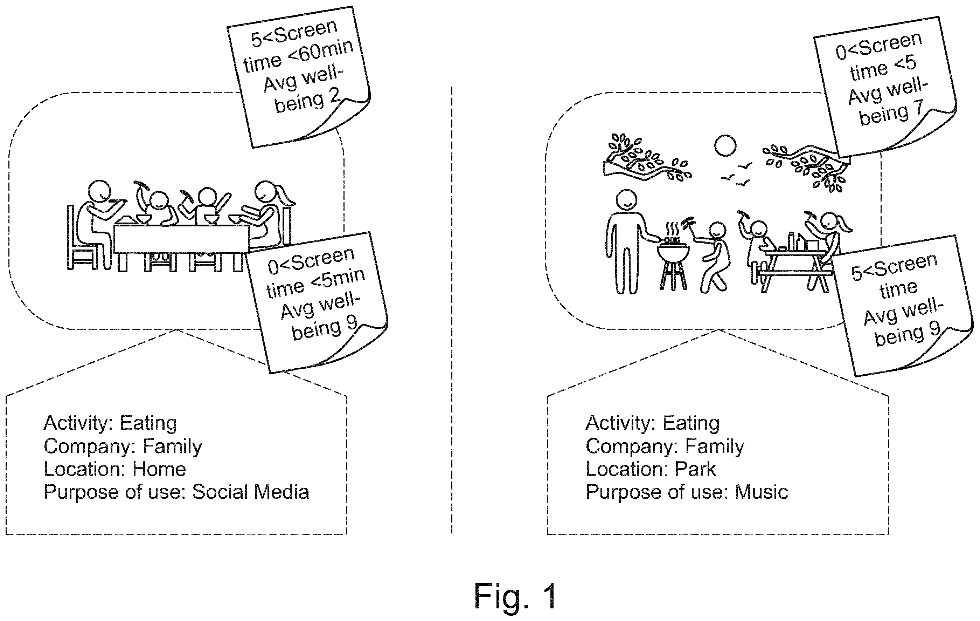

Fig. 1 illustrates the general concept of the context-dependent impact of screen time on a target state.

The hand-side panel of Fig. 1 shows an example in that a user is eating with their family at home and uses their smart phone for social media. In this context, using the smart phone for extended periods of 5 to 50 min leads to a low wellbeing score of 2. Using the smart phone for only short periods of 0 to 5 min leads to a high wellbeing score of 9. In this context and for this purpose, smart phone use is associated with a negative effect on wellbeing.

The right-side panel of Fig. 1 shows an example in that a user is eating with their family in the park and uses their smart phone for playing music. In this context, using the smart phone for only short periods of 0 to 5 min leads to an acceptable wellbeing score of 7. Using the smart phone for prolonged periods of more than 5 min, however, leads to a high well-being score of 9. In this context and for this purpose, smart phone use is associated with a positive effect on wellbeing.

As the above example illustrates, context plays a significant role when analysing the associations between the length of screen time, an operation mode of a device and a target state, such as well-being or battery fill level. Moreover, context can be hardly untangled as one can be in different context categories (also referred to as situational parameters) at the same time (location, activity, company etc.), as illustrated in Figure 1, and context category has a different significant role on the target state.

The situational parameter detected according to the present invention may thus be e.g. location, activity, company, interaction of the user with others, the time of the day or any other parameter capturing the situational context of the user.

The examples in Fig. 1 illustrate how different contextual categories values and the operation mode of the device ( also referred to as a purpose of use) need to be prioritised appropriately in order to reach a decision on whether to recommend or restrict device use and for how long to recommend or restrict device use, as well as to advise the user of alternative operation modes of the device predicted to bring the current state closer to the target state (also referred to as target condition).

In another example, the target condition can be the battery fill level, such that the method aims to optimise the time when to use the device based on the at least one situational parameter, e.g. company and location, the operation mode, e.g. playing music, and sensing data (e.g., Wi-Fi connected) in order to arrive at the end of the day with the battery level within a desired range.

In this regard, the present invention may thus be regarded as a personalised method or device to restrict or recommend an extension of primarily screen time and secondarily notifications, based on a prioritisation model of existing context categories of a user based on past historical data from the user and / or similar users, as well as identify alternative operation modes when considering a target state, and recommend alternative screen time or operation mode routines when considering a target state.

The present invention may be used for recommending screen time based on a user's context or situational parameters as well as current and historical screen time measurements, coupled with a target state. This invention for example contextualises screen-time into individual patterns of behaviour, as well as the target condition (such as subjective well-being, or battery level consumption) in order to create an engine for recommending an optimal screen-time (that can be restricting or extending the number and/or duration of screen-time slots).

This invention preferably defines a personalised model for optimising screen time by factoring in a user's context, personal characteristics, as well as historical data (both passive and active reports relating to the state value and / or target state) from the user and similar users in order to restrict (or extend) screen time use of a user. Active reports are preferably based on active input from the user, e.g. the user subjectively rating their wellbeing, whereas passive reports rely on acquired data, e.g. physiological data pertaining to the wellbeing of the user.

The model can also be used to recommend alternative operation modes or screen time patterns in order to optimise device usage for attaining a target state.

In other words, the invention may be described as follows:

A method according to the present invention may be described to comprise the following steps: (1) infer a users' context and target condition from the user's data as well as data from similar users, (2) given a fixed context and target condition, identifying the range of screen time for positive and negative effects on the target condition, and restricting or extending the device usage accordingly, preferably both in terms of screen time as well as notifications, (3) unpacking the positive and negative interaction elements of the user's context in order to recommend alternative positive uses considering the target condition, and (4) based on the additional parameters (e.g. avoiding night time 12am - 6am) define the recommended space of screen-time patterns in general for the user based on their routine behaviour. This is preferably performed by minimising the change in screen-time patterns, wherein change is preferably represented as a quantified difference between the current screen-time patterns and the recommended space of screen-time patterns, in order to recommend the optimal screen-time routine for the user given a target condition.

Fig. 2 illustrates an embodiment of the present invention.

The device according to this embodiment comprises a monitoring unit 1, an engine 2 for inferring a user's context and target state and an engine 3 for restricting and / or recommending screen time.

In this example, the monitoring unit 1 monitors or detects in step 1 (1) the length of screen-time, (2) contextual data such as location, company, interaction of the user with other users, movement, time of the day, season etc., (3) data pertaining to a state value or target state, such as wellbeing, battery consumption, battery fill level, and (4) personal characteristics of the user, such as gender, age, personality, individual preferences etc.

All these variables (1)-(4) can be monitored either by relying on active data collection, e.g. user's self-reports and diaries, or automatically measured, inferred or estimated, e.g. by using smartphone sensor data or data from sensors in wearables or smart-watches.

The monitoring unit may access historical records relating to at least the variables (1) to (4) of the user.

If no such historical records are available for a given user, the engine 2 may be used in step S2 to retrieve profiles of people similar to the user from a database based on data from the monitoring unit.

The engine 2 comprises a model for inferring in step 3 the user's current context based on for instance the user's historical mappings between past sensing data (including screen time) and inferred context, as well as historical mappings from similar people.

Alternatively, the context may be specified by the user, for example, the user may enter into the device that they are at work with a specific colleague.

The user's context can include the following aspects, but is not limited to these: activity (e.g., eating), company (e.g., family), location (e.g., park), purpose of device use (e.g., social media), thoughts (e.g., cooking class) etc. These may be regarded of examples of situational parameters of the user.

The engine 2 further comprises a model for inferring in step S4 the user's current state (which may be regarded as the state value of the user in a given context) based on the user's historical sensing data (including screen time) and inferred context from step S3, as well as historical mappings from similar people.

Alternatively, the user's current state may be specified by the user, for example, the user may enter into the device that they are experiencing a wellbeing score of 4.

Similarly, the target state, e.g. a wellbeing score of 6 or a battery fill level of 25 % at 6 pm, may be set by the user or an external source or inferred based on historical records of the user or similar people.

The engine 2 can use the model to generate in step S5 a function that given a fixed context, and varying values for the screen time, retrieves a range for the screen time such that it has a desired effect on the target state.

In other words, the function can predict state values, such as a battery fill level or a wellbeing score, for varying lengths of screen time (e.g. after 5 min of screen time, the battery level will be 25 % and / or the wellbeing score will be 7) given a fixed context including a fixed operation mode of the device (e.g. being at home with friends and using the device for playing music). An example of such a function is shown in Fig. 3.

The function allows to predict how much time the smart device should be operated in a given operation mode in a given situational context. If the predicted state value does not fall within a range of values set as the target state (e.g. after 20 min the predicted battery fill level is 25 %, but the target state is to achieve 28 % battery fill level after 30 min), screen time can be restricted or a recommendation can be issued prompting the user to change to a different operation mode of the device.

The engine 2 may generate different functions for different operation modes and a common given context to determine the optimal operation of the device in a given situational context, e.g. when alone at home, using the device for prolonged periods of reading leads to a higher battery fill level and / or wellbeing score than using the device for prolonged periods of watching videos on social media.

Alternatively or additionally, the engine 2 may generate different functions for the same operation mode and varying situational contexts to determine the optimal situation in that the device is operated in the given operation mode. For example, when the situational context indicates that the user is alone at home, using the device for prolonged periods of watching videos on social media may lead to a low wellbeing score and rapid drain of the battery fill level. On the other hand, when the situational context indicates that the user is in a bar with friends, using the device for prolonged periods of watching videos on social media may lead to a high wellbeing score, so the disadvantages of the rapid drain of the battery fill level are offset by the gain in wellbeing.

Based on the analysis results of the engine 2, the engine 3 in step S6 restricts or recommends to extend screen time for a given operation mode of the device.

**In** other words, given the extracted screen time range under the current context and the current monitored screen time, the device according to the invention restricts or recommends the device usage accordingly.

Preferably, if it has been determined by engine 2, in particular the function or model comprised therein, that the current screen time exceeds the limit resulting in the target state identified by the function or model for the current context, the display of notifications to the user is suppressed while the user is in this context.

This may be illustrated based on the exemplary function in Fig. 3. For example, the function in Fig. 3 indicates that the state value, e.g. the wellbeing score of the user, is above a threshold of 6 for a screen time length ranging from 15 to 31 min given a fixed context and operation mode of the device, e.g. reading / watching social media on the device alone at home. If the target state is defined as a wellbeing score of 6 or above, then a screen time between 15 to 31 min of using the device for social media when the user is alone at home results in the target state, in this example the user experiencing a wellbeing score of 6 or above.

After 31 min of screen time using the device for reading when the user is alone at home, according to an embodiment, the display of notifications to the user is suppressed while the user is in this context. If the context changes, e.g. the user gets company or changes to a different operation mode of the device, the suppression of notifications may be eased.

Additionally, in an embodiment of the invention, the device can be configured to suggest an alternative operation mode of the device to the user after the user has reached for a given operation mode of the device the end of the screen time predicted by the model or function to result in the state value matching the target state or has reached a tolerance range surrounding the end of screen time.

For example, turning to the function in Fig. 3, after the user has reached 31 min of reading / watching social media on the device alone at home, the engine 3 may draw on the results of the model of engine 2 to recommend an alternative operation mode predicted to achieve the target state for longer periods of screen time. This concept is illustrated by the exemplary functions in Fig. 4.

For example, as shown in Fig. 4, the user has reached 30 min of reading / watching social media on the device alone at home, as indicated by the vertical dashed line in Fig. 4. The user is thus approaching the end of screen time for this context and operation mode of the device predicted in step S5 to result in the state value matching the target state (a wellbeing score of above 6 in this example).

For example, the tolerance range surrounding the end of the predicted beneficial screen time (31 min) may be 5 min, 3 min or 1 min. The time length of the tolerance range may be set at will.

For recommending an alternative purpose of use predicted to result in the state value matching the target state, different situational parameters of a given context of the user, e.g. location: at home; company: with friends; time of day: 7 pm; activity: after exhausting exercise etc. may be weighted to determine which of these parameters is most decisive for how the user experiences a given context.

In other words, the device or method according to the present invention can be configured for untangling different situational parameters of a given context and extracting the weights of each parameter based on current screen time and leading to the user's current state value, personalized for the user under analysis either based on historical data from the user under analysis or from historical data from similar users.

Many times users are in a mixed context, such as eating with family members, at home, whilst listening to music or watching TV on a device. Allocating a weighting factor to reflect the priority and weight of each of these situational parameters on bringing the state value to the target state is crucial allows for a more realistic restriction or recommendation engine optimized for the target state.

The engine 3 can be configured to extract in step S7 an ordered list of weighted situational parameters of a given context of the user based on the analysis of engine 2 in steps S3 and S3.

For example, the situational parameters of a given context of the user may be as follows: location: at home; company: with friends; time of day: 7 pm; activity: after exhausting exercise.

Historical data of this particular user may indicate that whenever the user is with friends (situational company: with friends) the wellbeing score is 7 and the battery fill level rapidly decreases, regardless of the time of day or the location.

Thus, the situational parameter "company" can be weighted more heavily than the situational parameters "time of day" or "location". For example, the situational parameter company may be associated with a weighting factor of 30 and the situational parameters "time of day" or "location" may be associated with weighting factors 5 and 8, respectively. In this example, the ordered list may comprise the situational parameters in the order "company" with a weighting factor of 30, "location" with a weighting factor of 8 and "time of day" with a weighting factor of 5.

In other words, according to an embodiment of the invention, the model can be configured to generate a weighting factor for each situational parameter of a context of the user and generate an ordered list of the situational parameters based on the weighting factors.

The weighting factors can be generated based on historical data of a particular user and / or based on historical data of other people determined to be similar to the particular user, e.g. as outlined in step S2. For example, historical data relating to similar users may be retrieved and ranked based on the similarity of each user to the particular user and e.g. the historical data sets pertaining to the three most similar other users are selected to generate the weighting factors for the particular user.

From the ordered list generated in step 7, the situational parameters determined to be most relevant from the given context, e.g. in the example, the situational parameter "company" associated with the largest weighting factor, can be selected.

It can then be analysed which mode of operation of the device results in the state value matching the target state or tolerance range for which length of screen time, as shown e.g. by the exemplary functions illustrated in Fig. 4.

For example, in step S8, the engine 3 extracts positive and negative weights and the situational parameters associated therewith of a context the user currently experiences from the ordered list generated in step 7.

For example, for a current context, only the situational parameters "company" and "location" are available. Based on historical data it is known that for a particular user, the situational parameter "company" is associated with a weighting factor of 30 and the situational parameter "location" is associated with a weighting factor of 8. Thus, the situational parameters "company" and "location" are extracted together with the associated weighting factors 30 and 8. In this examples, these weighting factors are positive numbers. However, weighting factors may also be negative numbers, such as (-30) or (-8).

For example, given a fixed context with the situational parameter "company: with friends" with the weighting factor of 30 and the situational parameter "location: at home" with the weighting factor of 8, model can be used to predict for each mode of operation of the device the length of screen time in that the state value matches the target state or tolerance range, as shown e.g. by the exemplary functions illustrated in Fig. 4.

In other words, given the weighting factors, the screen time for each mode of operation of the device predicted to result in the state value matching the target state or tolerance range thereof as shown in Fig. 4, and the current target state, in step 9 the engine 3 identifies and / or recommends one or more alternative modes of operation of the device, especially when the user reached the limit in screen time. The alternative mode or modes of operation of the device are selected based on a prediction using the function to determine the length of screen time that results in the state value matching the target state or a tolerance range thereof.

In step S9, the engine 3 in this example outputs a recommendation regarding an alternative mode of operation of the device predicted by the model to be suited for achieving the target state, e.g. changing from the display of music videos to playing only the music in order to achieve the target state of 28% battery fill level at 6 pm).

In order to determine an optimal screen time routine, the device can further be configured to analyse a set or space of all possible screen-use patterns (when and for how long) that would have a desired impact on the state value, in particular bring the state value closer to the target state.

The device can be configured to compare the current use or momentary operation mode of the device or the current habits (estimated from a longer historical usage) of screen-time with this space of "allowed/recommended" screen time. In other words, the device may be configured to compare an actual screen time pattern of the user to an ideal screen time pattern predicted by the device to be optimal for the state value to match the target state or fall within a tolerance range surrounding the target state.

The device may further be configured to identify one or more time periods in the user's actual screen time pattern that show the smallest deviations from the ideal screen time pattern determined by the device. Thus, the device may be configured to recommend changes to the actual screen time pattern of the user for these identified time periods to ensure at least partial compliance of the actual screen time pattern to the ideal screen time pattern with the minimal amount of changes to the user's screen time pattern being required.

In other words, the device may be configured to compare the user's actual screen time pattern to an ideal screen time pattern determined by the device in order to find those recommendations that would require the smallest change in screen patterns for routine changes in favour of reaching the ideal screen time pattern.

This can result in recommendations that are momentary (meant to be done at that moment) or in habits (meant to change current habits), or both (changes in habits that imply a change at that moment)

The present invention is further illustrated by way of a detailed example as outlined below.

Examples of situational parameters are given in the following Table 1. The situational parameters are not limited to the examples.

The situational parameters may be singular variables, such as location: at home, which equals 1 if it has been detected that the user is at home and which equals 0 if it has been detected that the user is not at home, or interaction variables, such as activity:sports*company:friends, which equals 1 if it has been detected that the user is playing sports with at least one other person categorized as a friend and which equals 0 if it has been detected that the user is that the user is not playing sports or is not with at least one other person categorized as a friend.

At least one situational parameter of the user is detected. Multiple situational parameters of the user may be detected. If multiple situational parameters of the user are detected, at least one of the situational parameters can be an interaction variable.

*Table 1. Examples of situational parameters pertaining to a given context*

| | | | |
|---|---|---|---|
| *Time of the day* | *one hot encoded variables (e.g., morning, afternoon, evening, night)* | *Binary* | *Equals 1 when the relevant time slot is reported/inferred* |
| *Location* | *one hot encoded variables (e.g., park, home, family, work.)* | *Binary* | *Equals 1 when the relevant location is reported/inferred* |
| *Activity* | *one hot encoded variables (e.g., working, studying, eating, commuting, etc.)* | *Binary* | *Equals 1 when the relevant activity is reported/inferred* |
| *Company* | *one hot encoded variables (e.g., alone, colleagues, family, etc.)* | *Binary* | *Equals 1 when the relevant company is reported/inferred* |
| *Mode of operation or purpose of use* | *one hot encoded variables (e.g., social media, messaging, calls, etc.)* | *Binary* | *Equals 1 when the relevant purpose is reported/inferred* |
| *Interaction variables* | *one hot encoded variables (e.g., Activity*-Company)* | *Binary* | *Equals 1 when both variables are 1* |

According to an embodiment, the monitoring unit 1 is configured to retrieve at least one or more of the following information:

> a. Personal characteristics of a user, such as demographics, individual well-being set-points, personality, user's preferences, etc.
> b. Historical and current sensing data, e.g. from sensors from smart devices used by the users, wherein the sensing data preferably include screen time data
> c. Historical and current context data, preferably situational parameters, such as e.g., company, location, activity, purpose of use of the device. The context data may be inferred from sensing data from sensors or may be provided from another source, e.g. by the user or a calendar entry etc.
> d. Historical and current state value data, e.g., past records of well-being scores and / or past records of battery level during or at the end of the day etc.
> e. Historical mappings between past monitored contexts, screen time and past reported or inferred state values for a particular user, e.g. a well-being score of 6 after 20 min of screen time using the device to play music in the company of friends in the park, or a battery level of 22 % after 20 min of screen time using the device to play music in the park in the company of friends.

If such mapping is not available for a given user, the device can retrieve people with similar historical patterns (e.g., contexts) and personal characteristics as described in the context of step S2 in Fig. 2.

The engine 2 can comprise a model configured for retrieving similar people based on personal characteristics (at start) and further based on similar contexts and target states reported.

The engine 2 can comprise a model configured for retrieving the real-time context of the user, including the mode of operation of the device. The context of the user may be inferred with a sensing model based on devices' sensors connected to the user and / or based on past historical mappings between past monitored sensing values and inferred contexts either of the current user or similar users. Example of situational parameters relating to a user's context are given in Table 1. Examples of mapping between situational parameters and state values are given in Figure 1.

In other words, a device according to the present invention can be configured to detect the at least one situational parameter or context of the user in real-time and / or automatically.

If historical mappings of a particular user are not available, the context and / or situational parameter(s) of the user can be inferred from similar people's past historical mapping data retrieved by device.

Alternatively, the context and / or situational parameter(s) of the user can be specified by the user, e.g. by the user inputting their location, activity etc.

The engine 2 can comprise a model configured for retrieving the real-time state value of the user and / or device. The real-time state value of the user can be inferred with a sensing model based on devices' sensors connected to the user, and based on past historical mappings between past monitored contexts and state values either of the current user or similar users as well as the current screen time.

If historical mappings of a particular user are not available, the state value of the user can be inferred from similar people's past historical mapping data retrieved by device.

In a variation, the state value can be specified by the user, e.g. by the user inputting that they are experiencing a wellbeing score of 4 or that the device has a battery fill level of 50 %.

In step S5 a function that given a fixed context and varying values for the screen time retrieves a range for the screen time such that it has a desired effect on the state value. For example the function can be used to determine the length of screen time in that the state value matches the target state for a given mode of operation and given situational context of the user.

The function that infers the state value, e.g. a function as shown in Fig. 3 or 4 preferably receives as input the context (comprising e.g. situational parameters such as location, company, activity etc) of the user, the user characteristics and the screen time, and with that it computes the predicted value of the state value; in other words state_value=f(context, screen_time).

Given a fixed context, and leaving the screen time as variable it is possible to predict the state value for different values of screen time, in other words state_value = f(context=fix_context,screen_time)=g(screen_time). See Figure 3 for an example of the function and decision.

Given the extracted screen time range under the determined current context of the user and the current monitored screen time (e.g. the user has been using the device for a screen time of 30 min so far), the method or device may further restrict or recommend to extend the device usage accordingly.

Specifically, in the example of Figure 3 the method or device according to the present invention restricts the screen time for the given mode of operation of the device to a range of between 15 and 31 minutes in order to ensure the state value (e.g. wellbeing) to be above the desired threshold (e.g. 6) and thus match the target state, as indicated by grey shading in Fig. 3.

**If** the current screen time exceeds the limit identified by the method or device under the current context, for example, if in the example of Fig. 3 the user has used the device for the given mode of operation for 40 minutes, although 31 minutes has been identified as the limit of screen time predicted to result in the state value matching the target sate, the or device may further be configured to restrict or suppress the output of notifications on the device to the user while the user is in this context.

According to an embodiment of the invention, the device or method comprises or uses a model configured for unravelling the mapping between current state value and the current context or situational parameters given a length of the current monitored screen time.

This can be achieved for instance by training a machine learning model that predicts the state value given the context, preferably including a mode of operation of the device, personal characteristics of the user and screen time, such as the elapsed screen time so far, e.g. 30 min in Fig. 4.

From this model, an ordered list of contextual parameters may be extracted e.g. as outlined in step S7 in Fig. 2 that contribute to the current state value.

For example, a method or device according to the present invention may be configured to extract negative and positive weights or weighting factors of the reported or inferred situational parameters, e.g. as outlined in step S8 of Fig. 2 from the list generated e.g. as outlined in step S7 in Fig. 2.

For example, turning to Fig. 4, at the current screen time of the user of 30 min, the functions for the operation modes social media and playing music predict these modes of operation to result in a state value (e.g. a wellbeing score of the user) that matches the target state, defined in this example as a state value of 6 or above.

Thus, the modes of operation "social media" and "playing music" in this example can be associated with positive weights or weighting factors, because at the current screen time and / or future screen time, these modes of operation are predicted to result in the state value matching the target state.

The numerical value of each positive or negative weighting factor may scale with the length of screen time predict by the function for each mode of operation to result in a state value (e.g. a wellbeing score of the user) matching the target state, defined in this example as a state value of 6 or above.

For example, as shown in Fig. 4 the function for the mode of operation "music" predicts that the state value will match the target state for a screen time range between 22 to 70 min. The function for the mode of operation "social media" predicts that the state value will match the target state for a screen time range between 15 to 31 min.

Because the current screen time in the example of Fig. 4 is 30 min (as indicated by the dashed vertical line), the mode of operation "social media" is predicted to result in the state value matching the target only for one further minute (when 31 minutes of screen time will have elapsed), whereas the mode of operation "music" is predicted to result in the state value matching the target only for 40 further minutes (starting at 30 min of screen time until 70 minutes of screen time have been reached).

Thus, the positive weight or weighting factor associated with the mode of operation "music" can be a larger numerical value than the positive weight or weighting factor associated with the mode of operation "social media".

On the other hand, in Fig. 4, at the current screen time of the user of 30 min, the functions for the operation modes calls and messaging predict those modes of operation to result in a state value (e.g. a wellbeing score of the user) that does not match the target state, defined in this example as a state value of 6 or above.

Thus, the modes of operation "calls" and "messaging" in this example can be associated with negative weights or weighting factors, because at the current screen time and / or future screen time, these modes of operation are predicted not to result in the state value matching the target state.

Weights or weighting factors may be additionally or alternatively allocated to situational parameters that may be singular variables or interaction variables.

In this case, the mode of operation can be fixed, e.g. social media, and the function can be used to determine the state value resulting from a screen time spent in this mode of operation for different situational parameters, e.g. using the device for 20 min to consume social media has a positive impact on wellbeing when the user is alone at home but has a negative impact on wellbeing when the user is at home with family.

Thus, the situational parameters "company: none" and "company: family" in this example can be associated with positive and negative or weighting factors, respectively, because at the current screen time and / or future screen time and the given mode of operation, these situational parameters are predicted to result in the state value matching or not matching the target state, respectively.

In case of negatively weighted situational parameters that are interaction variables, the model is preferably configured to identify that parameter which causes the negative association. The identified parameter is preferably further used in step S9.

The method or device further proceeds to restrict the device usage whilst in the current context and mode of operation when negative weights were extracted, as outlined e.g. in steps S9 and S10.

In case of a positive weight or weighting factor, e.g. as extracted for the modes of operation "music" and "social media" at the screen time of 30 min in the example of Fig. 4, the method or device may not restrict device usage, given that the current mapping is positive.

In step S10, the method or device preferably further retrieves the top N related purposes, given the negative parameter, which in combination with the other contextual values would have a positive impact on the current state value, and/or would allow the user to continue using the phone and further recommend the user these alternative uses.

For example, the user could see the following message: *'You have reached the limit of screen time use, considering your context (Eating, Home, Family, Social Media). You could switch to using the device for Music or stop using the device altogether for optimal achievement target state).').*

In order to make the recommendation, all contexts except the "mode of operation" can remain constant fixed and the method or device can simulate the state value using the function f or functions f at the current screen time range for different modes of operation. Those modes of operation that have a predicted state value within the target state or desired range of values will be selected as recommended modes of operation. See Figure 4 for an example.

In step S9, the recommended changes to the user's screen time pattern are preferably selected to require minimal adaptations of the user's screen time pattern in order to achieve the target state.

Considering the optimal screen time pattern for the fixed context determined using the function (s), the method or device can be configured to further analyse the routine/habitual screen time use per context and to recommend the minimal changes to the routines in order to reach a desired effect on the state value. E.g. the user usually uses the screen or device for 30-50 minutes most days during the evening at home and 20-30 mins during lunch time at work. The device predicts that the optimal range of screen time for the evening at home is between 15-20 minutes and during lunch at work for 17-25 minutes. In this example, the system recommends/restricts to reduce the screen time during the evening at home to be less than 20 minutes and does not present any recommendations for lunch time at work.

In the following an exemplary embodiment of the invention is disclosed.

This example illustrates how a person may use this invention to change their routine in order to reach an optimal screen time habitual use considering as target state a defined level well-being, and as contextual information only the time of the day.

In this example as preferably in the context of the entire invention, the person or user preferably is a healthy individual.

In this example, the time of the day feature is be split into slots (morning, afternoon, evening and night), and can be easily inferred and not specified. Based on past reports of the user, this invention can build a model to infer the state value (i.e., well-being score) from the time of the day and the current screen time consumption (e.g. 30minutes screen time at 7 am). Over time, the model can determine or predict by fixing the context, which screen time is optimal for the state value to achieve the target state in this context and consequently, recommend to the user when to extend or reduce their screen time habitual consumption considering their routine behaviour.

While this example is restricted to smartphone use monitoring, the present invention is applicable to any digital device e.g., laptop, smart watch etc..

In this example, the user (user 1) is using an iOs Smartphone, which in this example is a device according to the present invention and collects background passive information from the smartphone sensors.

At the start of the use of the device, the monitoring unit retrieves, e.g. through questionnaires delivered on device, the users demographics, e.g. gender, ethnicity, age, etc., personality scores, e.g. big-5, fisher temperament inventory, etc., preferences, etc. In this example, the personal characteristics of the user are as follows:

- Gender: Male
- Age: 22
- Ethnicity: White
- User 1: Big 5: Openness: 44, Conscientiousness: 78, Extraversion: 55, Agreeableness: 39, Neuroticism: 23

The device continuously monitors a number of passive sensing data streams, e.g. screen time, step count, GPS coordinates, data consumption, etc. These data streams are "passive" in the sense that they do not require active input from the user and are preferably acquired continuously. These data points are used in the spot for further processing by the device and also stored in the database as historical data. In this example, the passive sensing data of the user are as follows:

- screen time: 12 minutes
- step count: 1026 steps
- gps coordinates: 40.41, -3.68
- data consumption: 48 Mb
- device battery fill level 28%

The device continuously monitors a number of situational parameters relating to the context of the user, e.g.

location, activity, company, mode of operation of the device, etc.. These data points are used in the spot for further processing by the device and also stored in the database as historical data.

In this example, this data is gathered through user's input to the device. In a different embodiment, a machine learning model, e.g. a neural network, for each situational parameter, e.g. location, activity, company, etc. can be trained using historical data and applied to the current passive sensing data. In this example, the situational parameters of the user are as follows:

- Location: park
- Activity: eating
- Company: friends
- Mode of operation of the device: Social media

The device continuously monitors the state value or infers the state value using a model, the state value in this example being the wellbeing score of the user. Generally, the state value is preferably monitored, inferred or assessed in realtime on a time-instant by time-instant basis.

These data points relating to the state values are used in the spot for for further processing by the device and are also stored in the database as historical data. In this example, a machine learning model trained on previous mappings between context, screen time and state value is used to infer the current target state. In this example, the state value of the user in the given context is as follows: Wellbeing score: 6

For each monitoring instance or time instant for that a state value has preferably been monitored, inferred or assessed, the mapping between context, screen time and state value is stored as historical data.

The device can retrieve the historical mappings of the current context, screen time and state value if such historical information is available, otherwise it will retrieve it from similar users. In this example, it is assumed that the mapping is available for the user and three past observations are retrieved:

- screen time: 23; Context: location: park, activity: eating, company: friends, purpose of use: social media; Wellbeing: 4
- screen time: 5; Context: location: park, activity: eating, company: friends, purpose of use: social media; Wellbeing: 8
- screen time: 14; Context: location: park, activity: eating, company: friends, purpose of use: social media; Wellbeing: 6

If no such previous mappings relating to the user are available, the model can be used to retrieve mappings of people determined to be similar to the user and whose mappings and / or historical data are available. In this example, the model used is a similarity score computed on the personality traits from the big 5 that ranks the users by their similarity score. The score used in this example is the euclidean distance similarity between the user's big 5 vector and the big 5 vector of each of the other users. Those top 3 users with the lowest euclidean distance are selected as similar users.

For example, historical data of people with the following big 5 personality trait vectors may be available:

- user 2: Openness: 21, Conscientiousness: 15, Extraversion: 72, Agreeableness: 45, Neuroticism: 89. Similarity: (95.8)
- user 3: Openness: 50, Conscientiousness: 63, Extraversion: 32, Agreeableness: 69, Neuroticism: 26. Similarity: (28.5)
- user 4: Openness: 53, Conscientiousness: 67, Extraversion: 49, Agreeableness: 46, Neuroticism: 19. Similarity: (17.4)
- user 5: Openness: 25, Conscientiousness: 62, Extraversion: 85, Agreeableness: 22, Neuroticism: 36. Similarity: (44.4)
- user 6: Openness: 79, Conscientiousness: 83, Extraversion: 44, Agreeableness: 27, Neuroticism: 32. Similarity: (20.2)

Thus, user 4, user 6 and user 3 are most similar to user 1 in terms of big 5 personality trait vectors. Hence the historical data pertaining to users 3,4 and 6 are retrieved to be used to infer correlations between a given context or situational parameter or situational parameters, mode of operation of device, screen time and state value.

In this example, the real-time context is received as input from the user. However, if that input is not available, a machine learning model can be trained on previous experience to infer the context. The context preferably is understood to comprise at least one situational parameter or a set of situational parameters, such as location, company or activity.

For instance, a neural network may be used that is trained on historical data from which both the passive sensing inputs and the corresponding context are available.

Preferably, for each situational parameter (location, company, mode of operation, etc.) a different model is trained to infer the situational context based on e.g. sensor data and information relating to the mode of operation.

Then, the same set of passive sensing inputs (X) can be passed as input to the trained neural network and the inferred context is outputted from the model. For example, a trained neural network trained to infer whether the user has company or not may receive input from movement sensors, location data and data relating to the mode of operation of the device. If the movement sensors indicate no movement, the location is "at home" and the mode of operation is "playing music", the user is likely alone and listening to music quietly. The inferred situational parameter company is thus: no company. Conversely, when the movement sensors indicate movement, the location is "at a bar" and the mode of operation is "playing music", the user is likely dancing at a bar which implies that the user has company. The inferred situational parameter company is thus: company.

Similarly, e.g. movement data may be input into a trained neural network for inferring whether the user has company or not. As the movement data indicate a high level of activity, the network may infer that the user has company. The same movement data may be input into a trained neural network for inferring the activity the user is performing. From the pattern of movement data, the neural network may infer that the user is running. The same movement data may be input into a trained neural network for inferring the time of day. From the pattern of movement data, the neural network may infer that it is 7pm because the user goes running every evening at 7 pm.

According to an embodiment of the invention, the device thus comprises a plurality of models each configured to infer a situational parameter of the user or device based on data passively obtained from the sensors present on the device or associated therewith and / or based on historical data pertaining to a user and / or historical data pertaining to at least one other user determined by the device to be similar to the user.

After the context of the user has been inferred or monitored, the device is configured to assess the state value of the user in real-time for each time instant.

For this purpose the device preferably comprises a model for retrieving the real-time state value of the user.

In this example, the model used uses a function inspired by the Maxwell-Boltzman distribution. Given personal characteristics (P), passive sensing data (S), context / situational parameter(s) (C), screen time (t) and mode of operation (also referred to as purpose of use or purpose) (U).

$$f(P, S, C, t, U) = \frac{b(P, S, C, U)t^2}{a(P, S, C, U)^3} e^{(-t^2/(2a(P,S,C,U)))}$$

where $b(P, S, C, U)$ and $a(P, S, C, U)$ are linear functions of each of the parameters and the function $f(P, S, C, t, U)$ is optimized by minimizing the Mean Squared Error between $f(P, S, C, t, U)$ and the actual state values observed on historical data.

An example of $a(P, S, C, U)$ with the P parameters being gender Male/Female (g=1 if female) and age (age numeric), S parameters being step count (steps numeric), C parameters being *location_park, location_home, activity_eating, activity_working, company_friends, company_family, company_alone* all binary, U being *purpose_calls, purpose_social_media, purpose_music and purpose_messaging* all binary:

$a (P, S, C, U) = w_0+w_1g+w_2age+w_3steps+w_4location\_park+w_5location\_home+w_6activity\_eating+w_7activity\_working\_ +w_8company\_friends+w_9company\_family+w_{10}company\_alone+w_{11}purpose\_socialmedia+w_{12}purpose\_music +w_{13}purpose\_messaging.$

and $b(P, S, C, U)$ constructed analogously with different weights.

Preferably, each parameter is allocated a designated weighting factors, wherein weighting factors of different parameters may correspond to equal or different numerical values. Each weighting factor may be a positive or negative number.

Based on the function determined for the user and a given context comprising one or more situational parameters, the device predicts for different modes of operations each a screen time range for in that the state value matches the target state or a tolerance range surrounding the target state.

Given the observed, retrieved or inferred values of the personal characteristics $P_s$, passive sensing data $S_s$, context $C_s$ and purpose of use $U_s$ the function to retrieve the real-time state value will be a function of screen time alone:

$$f(P = P_s, S = S_s, C = C_s, t, U = U_s) = \frac{b(P_s, S_s, C_s, U_s)t^2}{25a(P_s, S_s, C_s, U_s)^3} e^{(-t^2/(50a(P_s,S_s,C_s,U_s)))}$$

Let us assume that for this example, $a(P_s, S_s, C_s, U_s)$ = 10 and $b(P_s, S_s, C_s, U_s)$ = 1090.

Then, the function of the state value is given by:

$$f(t) = \frac{1090t^2}{25000} e^{(-t^2/(500))}$$

This exemplary function is shown in Fig. 3. Considering that the target state in this example is defined as a state value above 6, the range of screen time values that will have a positive effect on the target state or in that the state value matches the target state is between 15 and 31 minutes, see grey-shaded area in Figure 3.

In the next step, the device in this example restricts or recommends to extend phone usage according to retrieved screen time range.

In the present example, the range of screen time values with a positive effect on the state value is between 15 and 31 minutes. By assuming that the context / situational parameter(s) and the purpose of use or mode of operation of the device remain constant, if the screen time of the user reaches a value above 31 minutes the device will restrict the screen usage for that purpose, because further screen time in this mode of operation is predicted to result in the state value not matching the target state.

The device preferably does not only restrict screen time by offering the user a recommendation of an alternative mode of operation predicted to result in the state value matching the target state. Given the observed, retrieved or inferred values of the personal characteristics $P_s$, passive sensing data $S_s$, context $C_s$ and current screen time $t_s$, and considering that the user reached the upper limit of screen time time usage that has a positive effect on the state value with the current mode of operation $U_s$, the device retrieves alternative modes of operation predicted within the current context to bring a positive effect to the state value, in particular to result in the state value matching the target state or tolerance range or to bring the state value closer to the target state.

In this case, the device computes the output of $a(P_s, S_s, C_s, U)$ and $b(P_s, S_s, C_s, U)$ for different $U$ while keeping the rest of the parameters constant. In our example, the outputs for given $P_s$, $S_s$, $C_s$ as a function of $U$ are:

$$a(U) = 6 + 4 purpose\_social\_media + 34 purpose\_music - purpose\_calls$$
$$+ 2 purpose\_messaging$$

$$b(U) = 5000 - 3910 \; purpose\_social\_media + 15660 purpose\_music$$
$$- 4677 purpose\_calls + +4391 purpose\_messaging$$

Then, for each of the purposes / modes of operation the following screen time ranges are predicted to bring a positive effect to the state value for the following modes of operations, as illustrated in Fig. 4:

- $a(U = purpose\_social\_media)$ = 10, $b(U = purpose\_social\_media)$ = 1090 , as a result the state value is predicted to match the target state for values of screen time between 15 and 31 minutes.

- $a(U = purpose\_music)$ = 40, $b(U = purpose\_music)$ = 20660, as a result the state value is predicted to match the target state for values of screen time between 26 and 66 minutes.

- $a(U = purpose\_calls)$ = 5, $b(U = purpose\_calls)$ = 323, as a result the state value is predicted to match the target state for values of screen time between 9 and 23 minutes.

- $a(U = purpose\_messaging)$ = 8, $b(U = purpose\_messaging)$ = 609, as a result the state value is predicted to match the target state for values of screen time between 15 and 25 minutes.

In this example, if the user is using the device for social media and the screen time exceeds the 31 minutes, the device will recommend them to switch to using the device for playing music.

This example thus illustrates a computer-implemented method according to the present invention for optimizing the operation of a device to achieve a desired target state, that can be described to comprise the following steps:

- Monitoring a length of time a user interacts with the device, in particular a screen time by means of a monitoring unit,
- Acquiring by means of the monitoring unit data relating to at least one situational parameter of the user,
- Inferring by means of a model a context of the user based on the data relating to the at least one situational parameter of the user;
- Determining based on the inferred context of the user a function linking the length of screen time to the achievement of a target state, and

- Based on the function linking the length of screen time to the achievement of a target state, restricting screen time, recommending to extend screen time and / or recommending to change the operation of the device from a first operation mode to a second operation mode.

The person skilled in the art will understand that when in this disclosure alternative wording is used to describe the same or similar subject-matter, the alternative terms or words may be used interchangeably or as synonyms.

Additionally, the person skilled in the art will understand that if an element is disclosed in singular form with the article "a" or "an" this is not to be understood as "exactly one" but is meant in the sense of "at least one" with the disclosure not being limited to exactly one of these elements.

Furthermore, it is apparent to the person skilled in the art that if certain elements or features of the invention have been disclosed in a certain combination or in the context of a certain embodiment or aspect, these elements or features of the invention may also be claimed in isolation or in different combinations or in the context of a different embodiment.

**Claims**

1. A computer-implemented method for adapting the operation of a device to achieve a desired target state, comprising:

   - Detecting a length of time a user interacts with the device, in particular a screen time,
   - Detecting a first operation mode of the device in that the device is operated during the time the user interacts with the device,
   - Detecting at least one situational parameter of the user;
   - Inferring a state value of the user and / or device based on the monitored time length and the detected operation mode of the device and the at least one situational parameter of the user,
   - Comparing the inferred state value of the user and / or device to a target state and evaluating whether the state value matches the target state or falls into a tolerance range surrounding the target state, and
   - **If** the evaluation result indicates that the state value does not match the target state or does not fall into the tolerance range surrounding the target state, taking at least one action relating to the operation of the device.

2. Computer-implemented method according to claim 1, wherein the action relating to the operation of the device is outputting a recommendation, in particular a recommendation regarding a restriction or extension of screen time and / or a recommendation regarding switching the operation mode of the device from the first operation mode to a second operation mode.

3. Computer-implemented method according to claim 1 or 2, wherein the action relating to the operation of the device is restricting screen time and / or suppressing notifications for a period of time predicted to bring the state value closer to the target state.

4. Computer-implemented method according to one of the preceding claims, further comprising:

   - Inferring by means of a model a function of a state value in relation to a length of screen time, wherein the at least one detected situational parameter of the user and the detected first operation mode of the device are taken as constants,
   - predicting, based on the function, a length of screen time in that the inferred state value matches the target state or falls into a tolerance range surrounding the target state, and
   - based on the prediction, restricting or extending screen time and / or outputting a recommendation.

5. Computer-implemented method according to one of the preceding claims, further comprising:

   - inferring by means of a model a function of a state value in relation to a length of screen time for at least the detected first operation mode of the device and at least one other operation mode of the device, wherein the at least one detected situational parameter of the user is taken as a constant,
   - predicting, based on the function, for each operation mode a length of screen time in that the inferred state value matches the target state or falls into a tolerance range surrounding the target state,
   - selecting, based on the prediction, a second operation mode, and
   - if a detected length of screen time of the user for the first operation mode of the device has reached the limit of the predicted length of screen time for the first operation mode in that the inferred state value matches the target state or falls into a tolerance range surrounding the target state,

- switching the operation mode of the device from the first operation mode to the second operation mode or recommending to do so.

6. Computer-implemented method according to claim 5, wherein

- the model infers a function of a state value in relation to a length of screen time for the detected first operation mode of the device and a plurality of other operation modes of the device, and
- the plurality of other operation modes of the device are ranked based on the predicted length of screen time for each operation mode in that the inferred state value matches the target state or falls into a tolerance range surrounding the target state, and
- the second operation mode is selected based on the ranking of the operation modes and / or a detected length of screen time of the user for the first operation mode of the device.

7. Computer-implemented method according to one of the preceding claims, further comprising:

- extracting a habitual screen time pattern comprising at least one time instant from historical data relating to the user and / or device,
- comparing the habitual screen time pattern on a time-instant-by-time-instant basis to a screen time pattern predicted by the model to be associated with the target state, and
- if the comparison indicates that the habitual screen time pattern does not match the screen time pattern predicted to be associated with the target state or does not fall into a tolerance range surrounding the screen time pattern predicted to be associated with the target state, taking the at least one action relating to the operation of the device, wherein
- the at least one action preferably relates to that time instant of the habitual screen time pattern predicted by the model to require the minimum changes for reaching the target state.

8. Computer-implemented method according to one of the preceding claims, further comprising:

- inferring a first state value for a first time instance and a second current state for a second time instant,
- evaluating whether a distance between the first state value and the target state is equal, larger or smaller than a distance between the second state value and the target state, and
- indicating the result of the evaluation to the user.

9. Device configured to adapt the operation of the device to achieve a desired target state; comprising:

a detection unit configured for

- Detecting a length of time a user interacts with the device, in particular a screen time,
- Detecting a first operation mode of the device in that the device is operated during the time the user interacts with the device,
- Detecting at least one situational parameter of the user;

an evaluation unit configured for

- Inferring a state value of the user and / or device based on the monitored time length and the detected operation mode of the device and the at least one situational parameter of the user,
- Comparing the inferred state value of the user and / or device to a target state and evaluating whether the current state value matches the target state or falls into a tolerance range surrounding the target state, wherein

the device is configured for

- If the evaluation result indicates that the state value does not match the target state or does not fall into the tolerance range surrounding the target state, taking at least one action relating to the operation of the device.

10. Device according to claim 9, wherein the action relating to the operation of the device is outputting a recommendation, in particular a recommendation regarding a restriction or extension of screen time and / or a recommendation regarding switching the operation mode of the device from the first operation mode to a second operation mode.

11. Device according to claim 9 or 10, wherein the action relating to the operation of the device is restricting screen time and / or suppressing notifications for a period of time predicted to bring the state value closer to the target state.

12. Device according to one of claims 9 to 11, wherein the evaluation unit comprises a model configured

- to infer a function of a state value in relation to a length of screen time, wherein the at least one detected situational parameter of the user and the detected first operation mode of the device are taken as constants, and
- to predict, based on the function, a length of screen time in that the inferred state value matches the target state or falls into a tolerance range surrounding the target state, and

the device is configured to, based on the prediction, restrict or extend screen time and / or output a recommendation.

13. Device according to of claims 9 to 12, wherein the evaluation unit comprises a model configured:

- to infer a function of a state value in relation to a length of screen time for at least the detected first operation mode of the device and at least one other operation mode of the device, wherein the at least one detected situational parameter of the user is taken as a constant, and
- to predict, based on the function, for each operation mode a length of screen time in that the inferred state value matches the target state or falls into a tolerance range surrounding the target state, and
- select, based on the prediction, a second operation mode, and

the device is configured to

- if a detected length of screen time of the user for the first operation mode of the device has reached the limit of the predicted length of screen time for the first operation mode in that the inferred current state matches the target state or falls into a tolerance range surrounding the target state,
- switch the operation mode of the device from the first operation mode to the second operation mode or recommend to do so.

14. Device according to claim 13, wherein the model is further configured

- to infer a state value in relation to a length of screen time for the detected first operation mode of the device and a plurality of other operation modes of the device, and
- to rank the plurality of other operation modes of the device based on the predicted length of screen time for each operation mode in that the inferred state value matches the target state or falls into a tolerance range surrounding the target state, and
- to select the second operation mode based on the ranking of the operation modes and / or a detected length of screen time of the user for the first operation mode of the device.

15. Device according to one of claims 9 to 14, wherein the evaluation unit comprises a model configured

- to extract a habitual screen time pattern comprising at least one time instant from historical data relating to the user, and
- to compare the habitual screen time pattern of the user on a time-instant-by-time-instant basis to a screen time pattern predicted to be associated with the target state,
- if the comparison indicates that the habitual screen time pattern of the user does not match the screen time pattern predicted to be associated with the target state or does not fall into a tolerance range surrounding the screen time pattern predicted to be associated with the target state, to identify that time instant of the habitual screen time pattern predicted by the model to require the minimum changes for reaching the target state, and

the device is configured to

- if the comparison indicates that the habitual screen time pattern of the user does not match the screen time pattern predicted to be associated with the target state or does not fall into a tolerance range surrounding the screen time pattern predicted to be associated with the target state, take at least one action relating to the operation of the device, wherein
- the at least one action preferably relates to that time instant of the habitual screen time pattern predicted by the model to require the minimum changes for reaching the target state.

16. Device according to one of claims 9 to 14, wherein the evaluation unit comprises a model configured:

- to infer a first state value for a first time instance and a second state for a second time instant, wherein the first and second state value are inferred using the same function,
- to evaluate whether a distance between the first state value and the target state is equal, larger or smaller than a distance between the second state value and the target state, and

the device is configured to

- indicate the result of the evaluation to the user.

**Patentansprüche**

1. Computerimplementiertes Verfahren zum Anpassen des Betriebs eines Geräts, um einen gewünschten Zielzustand zu erreichen, umfassend:

- Erfassen einer Zeitdauer, in der ein Nutzer mit dem Gerät interagiert, insbesondere einer Bildschirmzeit,
- Erfassen eines ersten Betriebsmodus des Geräts, in dem das Gerät während der Zeitdauer betrieben wird, in der der Nutzer mit dem Gerät interagiert,
- Erfassen von mindestens einem Situationsparameter des Nutzers;
- Inferieren eines Zustandswertes des Nutzers und/oder des Geräts auf Basis der überwachten Zeitdauer und des erfassten Betriebsmodus des Geräts und des mindestens einen Situationsparameters des Nutzers,
- Vergleichen des inferierten Zustandswertes des Nutzers und/oder des Geräts mit einem Zielzustand und Bewerten, ob der Zustandswert dem Zielzustand entspricht oder in einen den Zielzustand umgebenden Toleranzbereich fällt, und
- wenn das Bewertungsergebnis anzeigt, dass der Zustandswert dem Zielzustand nicht entspricht oder nicht in den den Zielzustand umgebenden Toleranzbereich fällt, Ausführen mindestens einer Aktion in Bezug auf den Betrieb des Geräts.

2. Computerimplementiertes Verfahren nach Anspruch 1, wobei die Aktion in Bezug auf den Betrieb des Geräts das Ausgeben einer Empfehlung ist, insbesondere einer Empfehlung hinsichtlich einer Einschränkung oder Erweiterung der Bildschirmzeit und/oder einer Empfehlung hinsichtlich des Umschaltens des Betriebsmodus des Geräts vom ersten Betriebsmodus in einen zweiten Betriebsmodus.

3. Computerimplementiertes Verfahren nach Anspruch 1 oder 2, wobei die Aktion in Bezug auf den Betrieb des Geräts das Einschränken der Bildschirmzeit und/oder das Unterdrücken von Benachrichtigungen für einen Zeitraum ist, der vorhergesagt wird, um den Zustandswert näher an den Zielzustand zu bringen.

4. Computerimplementiertes Verfahren nach einem der vorhergehenden Ansprüche, ferner umfassend:

- Inferieren mittels eines Modells einer Funktion eines Zustandswertes in Relation zu einer Dauer der Bildschirmzeit, wobei der mindestens eine erfasste Situationsparameter des Nutzers und der erfasste erste Betriebsmodus des Geräts als Konstanten angenommen werden,
- Vorhersagen, basierend auf der Funktion, einer Dauer der Bildschirmzeit, bei der der inferierte Zustandswert dem Zielzustand entspricht oder in einen den Zielzustand umgebenden Toleranzbereich fällt, und
- basierend auf der Vorhersage Einschränken oder Erweitern der Bildschirmzeit und/oder Ausgeben einer Empfehlung.

5. Computerimplementiertes Verfahren nach einem der vorhergehenden Ansprüche, ferner umfassend:

- Inferieren mittels eines Modells einer Funktion eines Zustandswertes in Relation zu einer Dauer der Bildschirmzeit für mindestens den erfassten ersten Betriebsmodus des Geräts und mindestens einen anderen Betriebsmodus des Geräts, wobei der mindestens eine erfasste Situationsparameter des Nutzers als Konstante angenommen wird,
- Vorhersagen, basierend auf der Funktion, für jeden Betriebsmodus einer Dauer der Bildschirmzeit, bei der der inferierte Zustandswert dem Zielzustand entspricht oder in einen den Zielzustand umgebenden Toleranzbereich fällt,

- Auswählen, basierend auf der Vorhersage, eines zweiten Betriebsmodus, und
- wenn eine erfasste Dauer der Bildschirmzeit des Nutzers für den ersten Betriebsmodus des Geräts die Grenze der vorhergesagten Dauer der Bildschirmzeit für den ersten Betriebsmodus erreicht hat, bei der der inferierte Zustandswert dem Zielzustand entspricht oder in einen den Zielzustand umgebenden Toleranzbereich fällt,
- Umschalten des Betriebsmodus des Geräts vom ersten Betriebsmodus in den zweiten Betriebsmodus oder Empfehlen, dies zu tun.

6.  Computerimplementiertes Verfahren nach Anspruch 5, wobei

- das Modell eine Funktion eines Zustandswertes in Relation zu einer Dauer der Bildschirmzeit für den erfassten ersten Betriebsmodus des Geräts und eine Vielzahl anderer Betriebsmodi des Geräts inferiert, und
- die Vielzahl anderer Betriebsmodi des Geräts basierend auf der vorhergesagten Dauer der Bildschirmzeit für jeden Betriebsmodus gerankt wird, bei der der inferierte Zustandswert dem Zielzustand entspricht oder in einen den Zielzustand umgebenden Toleranzbereich fällt, und
- der zweite Betriebsmodus basierend auf dem Ranking der Betriebsmodi und/oder einer erfassten Dauer der Bildschirmzeit des Nutzers für den ersten Betriebsmodus des Geräts ausgewählt wird.

7.  Computerimplementiertes Verfahren nach einem der vorhergehenden Ansprüche, ferner umfassend:

- Extrahieren eines gewohnten Bildschirmzeitmusters, umfassend mindestens einen Zeitpunkt, aus historischen Daten in Bezug auf den Nutzer und/oder das Gerät,
- Vergleichen des gewohnten Bildschirmzeitmusters auf einer Zeitpunkt-für-Zeitpunkt-Basis mit einem durch das Modell vorhergesagten Bildschirmzeitmuster, das mit dem Zielzustand assoziiert zu sein vorhergesagt wird, und
- wenn der Vergleich anzeigt, dass das gewohnte Bildschirmzeitmuster nicht mit dem Bildschirmzeitmuster übereinstimmt, das vorhergesagt wird, mit dem Zielzustand assoziiert zu sein, oder nicht in einen den vorhergesagten Bildschirmzeitmuster umgebenden Toleranzbereich fällt, Ausführen der mindestens einen Aktion in Bezug auf den Betrieb des Geräts, wobei
- sich die mindestens eine Aktion vorzugsweise auf denjenigen Zeitpunkt des gewohnten Bildschirmzeitmusters bezieht, für den das Modell vorhersagt, dass er die minimalen Änderungen zum Erreichen des Zielzustands erfordert.

8.  Computerimplementiertes Verfahren nach einem der vorhergehenden Ansprüche, ferner umfassend:

- Inferieren eines ersten Zustandswertes für einen ersten Zeitpunkt und eines zweiten aktuellen Zustands für einen zweiten Zeitpunkt,
- Bewerten, ob ein Abstand zwischen dem ersten Zustandswert und dem Zielzustand gleich, größer oder kleiner ist als ein Abstand zwischen dem zweiten Zustandswert und dem Zielzustand, und
- Anzeigen des Ergebnisses der Bewertung an den Nutzer.

9.  Gerät, konfiguriert, den Betrieb des Geräts anzupassen, um einen gewünschten Zielzustand zu erreichen; umfassend:

eine Erfassungseinheit, konfiguriert zum

- Erfassen einer Zeitdauer, in der ein Nutzer mit dem Gerät interagiert, insbesondere einer Bildschirmzeit,
- Erfassen eines ersten Betriebsmodus des Geräts, in dem das Gerät während der Zeitdauer betrieben wird, in der der Nutzer mit dem Gerät interagiert,
- Erfassen von mindestens einem Situationsparameter des Nutzers;

eine Auswerteeinheit, konfiguriert zum

- Inferieren eines Zustandswertes des Nutzers und/oder des Geräts auf Basis der überwachten Zeitdauer und des erfassten Betriebsmodus des Geräts und des mindestens einen Situationsparameters des Nutzers,
- Vergleichen des inferierten Zustandswertes des Nutzers und/oder des Geräts mit einem Zielzustand und Bewerten, ob der aktuelle Zustandswert dem Zielzustand entspricht oder in einen den Zielzustand umgebenden Toleranzbereich fällt, wobei

das Gerät konfiguriert ist zum

- wenn das Bewertungsergebnis anzeigt, dass der Zustandswert dem Zielzustand nicht entspricht oder nicht in den den Zielzustand umgebenden Toleranzbereich fällt, Ausführen mindestens einer Aktion in Bezug auf den Betrieb des Geräts.

10. Gerät nach Anspruch 9, wobei die Aktion in Bezug auf den Betrieb des Geräts das Ausgeben einer Empfehlung ist, insbesondere einer Empfehlung hinsichtlich einer Einschränkung oder Erweiterung der Bildschirmzeit und/oder einer Empfehlung hinsichtlich des Umschaltens des Betriebsmodus des Geräts vom ersten Betriebsmodus in einen zweiten Betriebsmodus.

11. Gerät nach Anspruch 9 oder 10, wobei die Aktion in Bezug auf den Betrieb des Geräts das Einschränken der Bildschirmzeit und/oder das Unterdrücken von Benachrichtigungen für einen Zeitraum ist, der vorhergesagt wird, um den Zustandswert näher an den Zielzustand zu bringen.

12. Gerät nach einem der Ansprüche 9 bis 11, wobei die Auswerteeinheit ein Modell umfasst, das konfiguriert ist,

- eine Funktion eines Zustandswertes in Relation zu einer Dauer der Bildschirmzeit zu inferieren, wobei der mindestens eine erfasste Situationsparameter des Nutzers und der erfasste erste Betriebsmodus des Geräts als Konstanten angenommen werden, und
- basierend auf der Funktion eine Dauer der Bildschirmzeit vorherzusagen, bei der der inferierte Zustandswert dem Zielzustand entspricht oder in einen den Zielzustand umgebenden Toleranzbereich fällt, und

das Gerät konfiguriert ist, basierend auf der Vorhersage die Bildschirmzeit einzuschränken oder zu erweitern und/oder eine Empfehlung auszugeben.

13. Gerät nach einem der Ansprüche 9 bis 12, wobei die Auswerteeinheit ein Modell umfasst, das konfiguriert ist:

- eine Funktion eines Zustandswertes in Relation zu einer Dauer der Bildschirmzeit für mindestens den erfassten ersten Betriebsmodus des Geräts und mindestens einen anderen Betriebsmodus des Geräts zu inferieren, wobei der mindestens eine erfasste Situationsparameter des Nutzers als Konstante angenommen wird, und
- basierend auf der Funktion für jeden Betriebsmodus eine Dauer der Bildschirmzeit vorherzusagen, bei der der inferierte Zustandswert dem Zielzustand entspricht oder in einen den Zielzustand umgebenden Toleranzbereich fällt, und
- basierend auf der Vorhersage einen zweiten Betriebsmodus auszuwählen, und das Gerät konfiguriert ist zum
- wenn eine erfasste Dauer der Bildschirmzeit des Nutzers für den ersten Betriebsmodus des Geräts die Grenze der vorhergesagten Dauer der Bildschirmzeit für den ersten Betriebsmodus erreicht hat, bei der der inferierte aktuelle Zustand dem Zielzustand entspricht oder in einen den Zielzustand umgebenden Toleranzbereich fällt,
- Umschalten des Betriebsmodus des Geräts vom ersten Betriebsmodus in den zweiten Betriebsmodus oder Empfehlen, dies zu tun.

14. Gerät nach Anspruch 13, wobei das Modell ferner konfiguriert ist,

- einen Zustandswert in Relation zu einer Dauer der Bildschirmzeit für den erfassten ersten Betriebsmodus des Geräts und eine Vielzahl anderer Betriebsmodi des Geräts zu inferieren, und
- die Vielzahl anderer Betriebsmodi des Geräts basierend auf der vorhergesagten Dauer der Bildschirmzeit für jeden Betriebsmodus zu ranken, bei der der inferierte Zustandswert dem Zielzustand entspricht oder in einen den Zielzustand umgebenden Toleranzbereich fällt, und
- den zweiten Betriebsmodus basierend auf dem Ranking der Betriebsmodi und/oder einer erfassten Dauer der Bildschirmzeit des Nutzers für den ersten Betriebsmodus des Geräts auszuwählen.

15. Gerät nach einem der Ansprüche 9 bis 14, wobei die Auswerteeinheit ein Modell umfasst, das konfiguriert ist,

- ein gewohntes Bildschirmzeitmuster, umfassend mindestens einen Zeitpunkt, aus historischen Daten in Bezug auf den Nutzer zu extrahieren, und
- das gewohnte Bildschirmzeitmuster des Nutzers auf einer Zeitpunkt-für-Zeitpunkt-Basis mit einem Bildschirmzeitmuster zu vergleichen, das vorhergesagt wird, mit dem Zielzustand assoziiert zu sein,
- wenn der Vergleich anzeigt, dass das gewohnte Bildschirmzeitmuster des Nutzers nicht mit dem Bildschirmzeitmuster übereinstimmt, das vorhergesagt wird, mit dem Zielzustand assoziiert zu sein, oder nicht in einen den Bildschirmzeitmuster umgebenden Toleranzbereich fällt, der vorhergesagt wird, mit dem Zielzustand assoziiert zu sein, denjenigen Zeitpunkt des gewohnten Bildschirmzeitmusters zu identifizieren, für den das Modell vorhersagt, dass er die minimalen Änderungen zum Erreichen des Zielzustands erfordert, und

das Gerät konfiguriert ist zum

- wenn der Vergleich anzeigt, dass das gewohnte Bildschirmzeitmuster des Nutzers nicht mit dem Bildschirmzeitmuster übereinstimmt, das vorhergesagt wird, mit dem Zielzustand assoziiert zu sein, oder nicht in einen den Bildschirmzeitmuster umgebenden Toleranzbereich fällt, der vorhergesagt wird, mit dem Zielzustand assoziiert zu sein, Ausführen mindestens einer Aktion in Bezug auf den Betrieb des Geräts, wobei
- sich die mindestens eine Aktion vorzugsweise auf denjenigen Zeitpunkt des gewohnten Bildschirmzeitmusters bezieht, für den das Modell vorhersagt, dass er die minimalen Änderungen zum Erreichen des Zielzustands erfordert.

16. Gerät nach einem der Ansprüche 9 bis 14, wobei die Auswerteeinheit ein Modell umfasst, das konfiguriert ist:

- einen ersten Zustandswert für einen ersten Zeitpunkt und einen zweiten Zustand für einen zweiten Zeitpunkt zu inferieren, wobei der erste und der zweite Zustandswert unter Verwendung derselben Funktion inferiert werden,
- zu bewerten, ob ein Abstand zwischen dem ersten Zustandswert und dem Zielzustand gleich, größer oder kleiner ist als ein Abstand zwischen dem zweiten Zustandswert und dem Zielzustand, und

das Gerät konfiguriert ist zum

- Anzeigen des Ergebnisses der Bewertung an den Nutzer.

**Revendications**

1. Procédé mis en œuvre par ordinateur pour ajuster le fonctionnement d'un dispositif afin d'atteindre un état cible souhaité, comprenant :

- surveiller une durée pendant laquelle un utilisateur interagit avec le dispositif, en particulier un temps d'écran,
- surveiller un premier mode de fonctionnement du dispositif, dans lequel le dispositif est exploité pendant la durée pendant laquelle l'utilisateur interagit avec le dispositif,
- surveiller au moins un paramètre situationnel de l'utilisateur ;
- inférer une valeur d'état de l'utilisateur et/ou du dispositif sur la base de la durée surveillée et du mode de fonctionnement surveillé du dispositif et du au moins un paramètre situationnel de l'utilisateur,
- comparer la valeur d'état inférée de l'utilisateur et/ou du dispositif à un état cible et évaluer si la valeur d'état correspond à l'état cible ou tombe dans une plage de tolérance entourant l'état cible, et
- lorsque le résultat de l'évaluation indique que la valeur d'état ne correspond pas à l'état cible ou ne tombe pas dans la plage de tolérance entourant l'état cible, exécuter au moins une action concernant le fonctionnement du dispositif.

2. Procédé mis en œuvre par ordinateur selon la revendication 1, dans lequel l'action concernant le fonctionnement du dispositif consiste à émettre une recommandation, en particulier une recommandation relative à une restriction ou à une extension du temps d'écran et/ou une recommandation relative au basculement du mode de fonctionnement du dispositif du premier mode de fonctionnement vers un second mode de fonctionnement.

3. Procédé mis en œuvre par ordinateur selon la revendication 1 ou 2, dans lequel l'action concernant le fonctionnement du dispositif consiste à restreindre le temps d'écran et/ou à supprimer des notifications pendant une période qui est prédite afin de rapprocher la valeur d'état de l'état cible.

4. Procédé mis en œuvre par ordinateur selon l'une quelconque des revendications précédentes, comprenant en outre :

- inférer, au moyen d'un modèle, une fonction d'une valeur d'état en relation avec une durée du temps d'écran, le au moins un paramètre situationnel surveillé de l'utilisateur et le premier mode de fonctionnement surveillé du dispositif étant supposés être des constantes,
- prédire, sur la base de la fonction, une durée du temps d'écran à laquelle la valeur d'état inférée correspond à l'état cible ou tombe dans une plage de tolérance entourant l'état cible, et

- sur la base de la prédiction, restreindre ou étendre le temps d'écran et/ou émettre une recommandation.

5. Procédé mis en œuvre par ordinateur selon l'une quelconque des revendications précédentes, comprenant en outre :

- inférer, au moyen d'un modèle, une fonction d'une valeur d'état en relation avec une durée du temps d'écran pour au moins le premier mode de fonctionnement surveillé du dispositif et au moins un autre mode de fonctionnement du dispositif, le au moins un paramètre situationnel surveillé de l'utilisateur étant supposé être une constante,
- prédire, sur la base de la fonction, pour chaque mode de fonctionnement une durée du temps d'écran à laquelle la valeur d'état inférée correspond à l'état cible ou tombe dans une plage de tolérance entourant l'état cible,
- sélectionner, sur la base de la prédiction, un second mode de fonctionnement, et
- lorsqu'une durée surveillée du temps d'écran de l'utilisateur pour le premier mode de fonctionnement du dispositif a atteint la limite de la durée prédite du temps d'écran pour le premier mode de fonctionnement à laquelle la valeur d'état inférée correspond à l'état cible ou tombe dans une plage de tolérance entourant l'état cible,
- basculer le mode de fonctionnement du dispositif du premier mode de fonctionnement vers le second mode de fonctionnement ou recommander de le faire.

6. Procédé mis en œuvre par ordinateur selon la revendication 5, dans lequel

- le modèle infère une fonction d'une valeur d'état en relation avec une durée du temps d'écran pour le premier mode de fonctionnement surveillé du dispositif et une pluralité d'autres modes de fonctionnement du dispositif, et
- la pluralité d'autres modes de fonctionnement du dispositif est classée sur la base de la durée prédite du temps d'écran pour chaque mode de fonctionnement à laquelle la valeur d'état inférée correspond à l'état cible ou tombe dans une plage de tolérance entourant l'état cible, et
- le second mode de fonctionnement est sélectionné sur la base du classement des modes de fonctionnement et/ou d'une durée surveillée du temps d'écran de l'utilisateur pour le premier mode de fonctionnement du dispositif.

7. Procédé mis en oeuvre par ordinateur selon l'une quelconque des revendications précédentes, comprenant en outre :

- extraire un schéma habituel de temps d'écran, comprenant au moins un instant, à partir de données historiques concernant l'utilisateur et/ou le dispositif,
- comparer le schéma habituel de temps d'écran, instant par instant, avec un schéma de temps d'écran prédit par le modèle comme étant associé à l'état cible, et
- lorsque la comparaison indique que le schéma habituel de temps d'écran ne correspond pas au schéma de temps d'écran prédit comme étant associé à l'état cible ou ne tombe pas dans une plage de tolérance entourant le schéma de temps d'écran prédit, exécuter la au moins une action concernant le fonctionnement du dispositif, dans lequel
- la au moins une action se rapporte de préférence à l'instant du schéma habituel de temps d'écran pour lequel le modèle prédit qu'il requiert des modifications minimales pour atteindre l'état cible.

8. Procédé mis en œuvre par ordinateur selon l'une quelconque des revendications précédentes, comprenant en outre :

- inférer une première valeur d'état pour un premier instant et un second état actuel pour un second instant,
- évaluer si une distance entre la première valeur d'état et l'état cible est égale, supérieure ou inférieure à une distance entre la seconde valeur d'état et l'état cible, et
- afficher à l'utilisateur le résultat de l'évaluation.

9. Dispositif, configuré pour ajuster le fonctionnement du dispositif afin d'atteindre un état cible souhaité ; comprenant :

une unité de détection, configurée pour

- surveiller une durée pendant laquelle un utilisateur interagit avec le dispositif, en particulier un temps d'écran,
- surveiller un premier mode de fonctionnement du dispositif, dans lequel le dispositif est exploité pendant la durée pendant laquelle l'utilisateur interagit avec le dispositif,
- surveiller au moins un paramètre situationnel de l'utilisateur ;

une unité d'évaluation, configurée pour

- inférer une valeur d'état de l'utilisateur et/ou du dispositif sur la base de la durée surveillée et du mode de fonctionnement surveillé du dispositif et du au moins un paramètre situationnel de l'utilisateur,
- comparer la valeur d'état inférée de l'utilisateur et/ou du dispositif à un état cible et évaluer si la valeur d'état actuelle correspond à l'état cible ou tombe dans une plage de tolérance entourant l'état cible, dans lequel

le dispositif est configuré pour

- lorsque le résultat de l'évaluation indique que la valeur d'état ne correspond pas à l'état cible ou ne tombe pas dans la plage de tolérance entourant l'état cible, exécuter au moins une action concernant le fonctionnement du dispositif.

10. Dispositif selon la revendication 9, dans lequel l'action concernant le fonctionnement du dispositif consiste à émettre une recommandation, en particulier une recommandation relative à une restriction ou à une extension du temps d'écran et/ou une recommandation relative au basculement du mode de fonctionnement du dispositif du premier mode de fonctionnement vers un second mode de fonctionnement.

11. Dispositif selon la revendication 9 ou 10, dans lequel l'action concernant le fonctionnement du dispositif consiste à restreindre le temps d'écran et/ou à supprimer des notifications pendant une période qui est prédite afin de rapprocher la valeur d'état de l'état cible.

12. Dispositif selon l'une quelconque des revendications 9 à 11, dans lequel l'unité d'évaluation comprend un modèle configuré pour

- inférer une fonction d'une valeur d'état en relation avec une durée du temps d'écran, le au moins un paramètre situationnel surveillé de l'utilisateur et le premier mode de fonctionnement surveillé du dispositif étant supposés être des constantes, et
- prédire, sur la base de la fonction, une durée du temps d'écran à laquelle la valeur d'état inférée correspond à l'état cible ou tombe dans une plage de tolérance entourant l'état cible, et
- le dispositif est configuré pour, sur la base de la prédiction, restreindre ou étendre le temps d'écran et/ou émettre une recommandation.

13. Dispositif selon l'une quelconque des revendications 9 à 12, dans lequel l'unité d'évaluation comprend un modèle configuré pour :

- inférer une fonction d'une valeur d'état en relation avec une durée du temps d'écran pour au moins le premier mode de fonctionnement surveillé du dispositif et au moins un autre mode de fonctionnement du dispositif, le au moins un paramètre situationnel surveillé de l'utilisateur étant supposé être une constante, et
- prédire, sur la base de la fonction, pour chaque mode de fonctionnement une durée du temps d'écran à laquelle la valeur d'état inférée correspond à l'état cible ou tombe dans une plage de tolérance entourant l'état cible, et
- sélectionner, sur la base de la prédiction, un second mode de fonctionnement, et

le dispositif est configuré pour

- lorsqu'une durée surveillée du temps d'écran de l'utilisateur pour le premier mode de fonctionnement du dispositif a atteint la limite de la durée prédite du temps d'écran pour le premier mode de fonctionnement à laquelle l'état actuel inféré correspond à l'état cible ou tombe dans une plage de tolérance entourant l'état cible,
- basculer le mode de fonctionnement du dispositif du premier mode de fonctionnement vers le second mode de fonctionnement ou recommander de le faire.

14. Dispositif selon la revendication 13, dans lequel le modèle est en outre configuré pour

- inférer une valeur d'état en relation avec une durée du temps d'écran pour le premier mode de fonctionnement surveillé du dispositif et une pluralité d'autres modes de fonctionnement du dispositif, et
- classer la pluralité d'autres modes de fonctionnement du dispositif sur la base de la durée prédite du temps d'écran pour chaque mode de fonctionnement à laquelle la valeur d'état inférée correspond à l'état cible ou tombe dans une plage de tolérance entourant l'état cible, et

- sélectionner le second mode de fonctionnement sur la base du classement des modes de fonctionnement et/ou d'une durée surveillée du temps d'écran de l'utilisateur pour le premier mode de fonctionnement du dispositif.

15. Dispositif selon l'une quelconque des revendications 9 à 14, dans lequel l'unité d'évaluation comprend un modèle configuré pour

- extraire un schéma habituel de temps d'écran, comprenant au moins un instant, à partir de données historiques concernant l'utilisateur, et
- comparer le schéma habituel de temps d'écran de l'utilisateur, instant par instant, avec un schéma de temps d'écran prédit comme étant associé à l'état cible,
- lorsque la comparaison indique que le schéma habituel de temps d'écran de l'utilisateur ne correspond pas au schéma de temps d'écran prédit comme étant associé à l'état cible ou ne tombe pas dans une plage de tolérance entourant le schéma de temps d'écran dont il est prédit qu'il est associé à l'état cible, identifier l'instant du schéma habituel de temps d'écran pour lequel le modèle prédit qu'il requiert des modifications minimales pour atteindre l'état cible, et

le dispositif est configuré pour

- lorsque la comparaison indique que le schéma habituel de temps d'écran de l'utilisateur ne correspond pas au schéma de temps d'écran prédit comme étant associé à l'état cible ou ne tombe pas dans une plage de tolérance entourant le schéma de temps d'écran dont il est prédit qu'il est associé à l'état cible, exécuter au moins une action concernant le fonctionnement du dispositif, dans lequel
- la au moins une action se rapporte de préférence à l'instant du schéma habituel de temps d'écran pour lequel le modèle prédit qu'il requiert des modifications minimales pour atteindre l'état cible.

16. Dispositif selon l'une quelconque des revendications 9 à 14, dans lequel l'unité d'évaluation comprend un modèle configuré pour :

- inférer une première valeur d'état pour un premier instant et un second état pour un second instant, la première et la seconde valeur d'état étant inférées au moyen de la même fonction,
- évaluer si une distance entre la première valeur d'état et l'état cible est égale, supérieure ou inférieure à une distance entre la seconde valeur d'état et l'état cible, et

le dispositif est configuré pour

- afficher à l'utilisateur le résultat de l'évaluation.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013138983 A1